(19) Europäisches Patentamt / European Patent Office / Office européen des brevets

(11) **EP 4 375 316 B1**

(12) **EUROPEAN PATENT SPECIFICATION**

(45) Date of publication and mention of the grant of the patent:
**11.03.2026 Bulletin 2026/11**

(21) Application number: **22845837.8**

(22) Date of filing: **14.07.2022**

(51) International Patent Classification (IPC):
***C08J 5/08*** *(2006.01)* ***B29B 17/04*** *(2006.01)*
***C08J 3/215*** *(2006.01)* ***C08J 11/06*** *(2006.01)*
***C08K 7/14*** *(2006.01)* ***C08L 81/02*** *(2006.01)*

(52) Cooperative Patent Classification (CPC):
**C08L 81/02; B29B 17/04; C08G 75/02; C08J 3/203; C08J 5/08; C09D 181/02; C09J 181/02;**
B29B 2017/0015; B29B 2017/042; B29B 2017/0468; B29K 2081/04; B29K 2105/12; B29K 2309/08; C08J 11/06; C08J 2381/02; (Cont.)

(86) International application number:
**PCT/JP2022/027656**

(87) International publication number:
**WO 2023/002903 (26.01.2023 Gazette 2023/04)**

(54) **METHOD FOR PRODUCING GLASS FIBER-REINFORCED RECYCLED POLYPHENYLENE SULFIDE RESIN COMPOSITION, AND MOLDED ARTICLE OBTAINED BY MOLDING GLASS FIBER-REINFORCED RECYCLED POLYPHENYLENE SULFIDE RESIN COMPOSITION**

VERFAHREN ZUR HERSTELLUNG EINER GLASFASERVERSTÄRKTEN RECYCELTEN POLYPHENYLENSULFIDHARZZUSAMMENSETZUNG UND DURCH FORMEN EINER GLASFASERVERSTÄRKTEN RECYCELTEN POLYPHENYLENSULFIDHARZZUSAMMENSETZUNG ERHALTENER FORMKÖRPER

PROCÉDÉ DE PRODUCTION DE COMPOSITION DE RÉSINE DE SULFURE DE POLYPHÉNYLÈNE RECYCLÉE RENFORCÉE EN FIBRES DE VERRE ET ARTICLE MOULÉ OBTENU PAR MOULAGE DE COMPOSITION DE RÉSINE DE SULFURE DE POLYPHÉNYLÈNE RECYCLÉE RENFORCÉE EN FIBRES DE VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2021 JP 2021118378**

(43) Date of publication of application:
**29.05.2024 Bulletin 2024/22**

(73) Proprietor: **Toray Industries, Inc.**
**Tokyo 103-8666 (JP)**

(72) Inventors:
- **YAMANAKA, Yuji**
  **Nagoya-shi, Aichi 455-8502 (JP)**
- **YARIMIZU, Ryosuke**
  **Nagoya-shi, Aichi 455-8502 (JP)**
- **ISAGO, Hiroyuki**
  **Nagoya-shi, Aichi 455-8502 (JP)**
- **UNOHARA, Takeshi**
  **Otsu-shi, Shiga 520-8558 (JP)**
- **HORIUCHI, Syunsuke**
  **Nagoya-shi, Aichi 455-8502 (JP)**

(74) Representative: **Mewburn Ellis LLP**
**Aurora Building**
**Counterslip**
**Bristol BS1 6BX (GB)**

(56) References cited:
**WO-A1-2013/099234** **JP-A- 2001 026 719**
**JP-A- 2009 291 986** **JP-A- 2010 116 428**
**JP-A- 2015 009 436** **JP-A- 2015 081 321**
**JP-A- 2017 171 731** **JP-A- H0 780 834**
**JP-A- H0 780 834** **JP-A- H06 145 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**JP-A- S62 153 345** **JP-B2- 5 919 004**

(52) Cooperative Patent Classification (CPC): (Cont.)
Y02W 30/62

## Description

### Technical Field

The present invention relates to recycling of waste plastics, a method of producing a glass fiber-reinforced recycled PPS resin composition in which decrease in mechanical properties of a molded product made of a polyphenylene sulfide resin containing glass fibers are extremely small, and the resulting glass fiber-reinforced recycled PPS resin composition.

### Background Art

Polyphenylene sulfide (hereinafter abbreviated as PPS) resin is an engineering plastic having excellent heat resistance, chemical resistance, flame retardance, and electrical properties, and is reinforced with glass fibers or the like and used mainly for automobile parts, plumbing parts, and electrical and electronic parts.

In recent years, the recycling of thermoplastic resins has been accelerating with the aim of realizing a circular economy, and in particular there has been an increasing demand for closed-loop recycling, in which used products are recycled as the same product.

PPS is suitable for material recycling due to its excellent durability, but is mostly used as a glass fiber-reinforced PPS resin composition (hereinafter abbreviated as GFR-PPS). Since the glass fibers in GFR-PPS are damaged during the molding and recycling steps, there has been a problem that the recycled resin composition (hereinafter referred to as "recycled material") has deteriorated mechanical properties compared to the resin composition that has not been recycled (hereinafter referred to as virgin material).

Also, there has been a problem that recycled materials made from recovered molded products after having been used in the market tend to have deteriorated mechanical properties due to dusty and oily contaminants adhered thereto, and furthermore, odor derived from the contaminants is generated during molding and usage of the molded product, which restricts recycling.

To address these problems, there is a report that adding a cyclic PPS compound as a melt stabilizer to the PPS resin composition containing a linear PPS resin and a filler is studied as a method to suppress deterioration during melt processing of PPS and to suppress degradation of mechanical properties of the recycled materials (see, for example, Patent Literature 1). In addition, as a method of improving the strength of the recycled materials of the glass fiber-reinforced resin, a recycled resin composition is proposed which is obtained by making the crushed products of the recovered molded products generated during molding of the recycled resin compositions into a mixture containing raw resins and additives for the resin, instead of pelletizing, followed by melt-kneading (see, for example, Patent Literature 2). A method to improve the strength of the recycled resin compositions by mixing the recycled resin with the long-fiber reinforced thermoplastic resin pellets has also been proposed (see, for example, Patent Literature 3). Patent Literature 4 discloses the preparation of a composition comprising 59.5 wt. % PPS and 40 wt. % of glass fibers. This composition can be mixed with a ground molded object, which is a fibrous filler reinforced PPS. The fibrous filler preferably is glass fiber.

### Citation List

#### Patent Literature

Patent Literature 1 JP-A H10-77408
Patent Literature 2 JP-A 2001-26719
Patent Literature 3 JP-A H11-166054
Patent Literature 4 JP 2009 291986 A

### Summary of Invention

#### Technical Problem

However, the PPS resin composition described in Patent Literature 1 is a method to suppress degradation of physical properties caused by the molecular chain cleavage of the PPS, and fails to solve the problem of degradation of mechanical properties due to breakage of glass fibers. In addition, the production method described in Patent Literature 2 is a method of reducing the thermal history of the recovered molded product and capable of suppressing further breakage of glass fibers in the recycled resin composition. However, it is hard to be said that it is a technology for regenerating the

composition whose mechanical properties have deteriorated due to the already broken glass fibers. Furthermore, there is no description of the characteristics of PPS. In Patent Literature 3, it is possible to regenerate the glass fiber length in the recycled resin composition, but the glass fiber content and specific gravity of the long fiber-reinforced thermoplastic resin pellets are different from those of the recycled resin. Accordingly, the composition of the resulting recycled resin composition cannot be the same composition as the recycled resin, and thus it cannot be applied to closed-loop recycling. Furthermore, PPS has poor adhesion to glass fiber due to its low amount of functional groups. However, there is no disclosure of a method to solve this problem nor a description of blending of an olefin copolymer resin used to modify PPS.

Solution to Problem

Therefore, the present inventors have studied intensively to solve the above problems. As a result, the present inventors have found that the above problems can be solved by mixing the crushed molded product obtained by crushing the molded product which is a blend of the PPS resin and the glass fibers with a PPS resin composition consisting of a PPS resin having a particular weight average molecular weight and glass fibers. Furthermore, the present inventors have found that the object is more efficiently achieved by mixing a specific Glass Long Fiber Reinforced PPS Resin Composite as the PPS resin composition, and thus attained the present invention.

That is, the present invention is as defined in the appended claims. Advantageous Effects of Invention

The glass fiber-reinforced recycled PPS resin composition obtained by the method of the present invention can be utilized in a wide range of fields such as injection molding applications, while retaining its original mechanical strength and moldability even after recycling. The glass fiber-reinforced recycled PPS resin composition having these properties will be a material that contributes to the realization of a circular economy.

Description of Embodiments

Hereinafter, the present invention will be further described in detail.

A method of producing a glass fiber-reinforced recycled PPS resin composition in the present invention includes:

crushing a molded product containing a PPS resin and glass fibers to obtain a crushed molded product (A), and mixing the crushed molded product (A) and a PPS resin composition (B) containing 40 to 90 wt% of the PPS resin having a weight average molecular weight of 20,000 to 60,000 and 10 to 60 wt% of glass fibers.

Mixing of the crushed molded product (A) and the PPS resin composition (B) in the present invention includes melt kneading of the crushed molded product (A) and the PPS resin composition (B) in an extruder or the like. From the viewpoint of suppressing breakage of glass fibers in the crushed molded product (A), however, mixing without melt-kneading, for example, pellet blending of the pellets of the crushed molded product (A) and PPS resin composition (B) is preferred. Here, the PPS resin composition (B) does not include the crushed molded product (A).

Examples of the crushed molded product (A) include debris of sprue/runner or the like recovered during injection molding, as well as debris of the molded product obtained by molding GFR-PPS by injection molding or the like, the GFR-PPS having been containing the PPS resin and glass fibers. The GFR-PPS may contain two or more types of PPS resins, and may also contain the crushed molded product composed of resins other than the PPS resin mixed therein, so long as the weight thereof is 30 wt% or less of the total weight of the crushed molded product.

From the viewpoint of achieving a circular economy, the crushed molded product (A) is preferably obtained by crushing the molded product recovered after having been used as a product in the market, and such a molded product is more preferably composed of the glass fiber-reinforced recycled PPS resin composition obtained by the production method of the present invention. From the viewpoint of achieving a closed-loop recycling, the crushed molded product (A) is preferably composed of 40 to 90 wt% of the PPS resin having Mw of 20,000 to 60,000 and 10 to 60 wt% of glass fibers. Preferred PPS resin and glass fibers will be described below.

From the viewpoint of obtaining excellent toughness, the crushed molded product (A) is preferably containing 1 to 20 wt% of the olefin copolymer. Preferred olefin copolymers will be described below.

When the crushed molded product (A) is debris obtained by crushing the molded product recovered after having been used as a product in the market, it is preferably washed with a solvent either before or after crushing to remove deposits from the viewpoint of suppressing odor and degradation in mechanical properties due to dirt components. Example of the solvent include water and organic polar solvents. From the viewpoint of costs, water is preferred. From the viewpoint of efficiently removing the dirt components, organic polar solvents are preferred. From the viewpoint of handling properties, N-methyl-2-pyrrolidone (NMP) is preferred. A mixture of a plurality of solvents may be used, or washing may be performed in two steps, such as washing with an organic polar solvent and then washing with water. A method of washing is not particularly limited so long as it can remove deposits with a solvent. Examples include a batch-type washing method including immersing a molded product in a tank and removing the molded product after stirring, and a continuous washing

method including pouring a solvent on a molded product while it is being conveyed on a conveyor or a rotary screen. Furthermore, coarse crushing before washing may be allowed to improve washing efficiency.

The crushed molded product (A) is easy to handle when it is a product made only of resin materials. In the present invention, an insert-molded product of resin and metal is applicable as long as metal is removed. It may also contain small amounts of metal parts. In such a case, since removing the metal parts at the time of recovery is associated with a decrease in productivity, it is preferable to use a metal removing device in the manufacturing step of the crushed molded product. Specific examples of the metal removing device include separation devices of a type of using a magnet to remove metal adhered thereto, of a magnetic force type, and of an eddy current type.

The crushed molded product (A) may be pellets of a crushed molded product obtained by crushing the molded product and subsequently melt-kneading the debris, which can favorably solve classification and poor supply to an extruder or molding machine, occurring at the time of mixing the crushed molded product (A) and the PPS resin composition (B).

The method of melt-kneading such a crushed molded product alone into resin pellets is described in paragraphs [0004], [0032], etc. of Patent Literature 2 as being undesirable because it increases the number of thermal histories, but the glass fiber-reinforced recycled PPS resin composition in the present invention is characterized in that a PPS resin having high heat resistance and high chemical resistance and inherently resistant to a thermal history is used as a matrix resin, and a PPS resin having a weight average molecular weight in a specific range is further selected. With such characteristics, the mechanical strength and moldability inherent to the PPS resin can be maintained even when such a method is used.

A representative example of the melt-kneading for obtaining the pellets of a crushed molded product is a method including supplying a raw material to a known melt-kneader such as a single- or twin-screw extruder, a banbury mixer, a kneader, and a mixing roll and melt-kneading so that the resin temperature is 280°C to 380°C. However, since such a method may lead to breakage of glass fibers and degradation of physical properties of the GFR-PPS, it is preferable to suppress breakage of glass fibers as much as possible, and thus melt-kneading with a single-screw extruder is preferred. The temperature conditions for melt-kneading in this event are preferably 300°C or more and 360°C or less for the purpose of suppressing breakage of glass fibers. Note that the resin temperature used herein is a value obtained by directly measuring the temperature of the resin discharged from the extruder.

Preferably, the crushed molded product (A) has a size that can be fed to an extruder or molding machine, and more preferably, its fragment has a major axis dimension of 1 to 20 mm or less.

The lower limit of the blending amount of the crushed molded product (A) in the glass fiber-reinforced recycled PPS resin composition is, preferably 10 wt% or more, more preferably 20 wt% or more, and still more preferably 40 wt% or more, and from the viewpoint of low environmental loading, particularly preferably 50 wt% or more, and even more preferably 60 wt% or more,. The upper limit of the blending amount of the crushed molded product (A) is more preferably 90 wt% or less, and still more preferably 80 wt% or less, from the viewpoint of developing various properties equivalent to those of the virgin material.

The PPS resin used in the present invention is a polymer having repeating units represented by the following structural formula:

[Chem. 1]

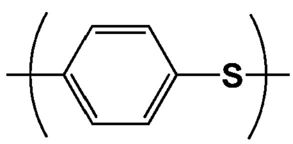

A polymer containing 70 mol% or more, more particularly 90 mol% or more of the polymer containing the repeating units represented by the above structural formula is preferable from the viewpoint of heat resistance. Further, in the PPS resin, less than about 30 mol% of the repeating units may be constituted by at least one type of the repeating units having the following formula:

[Chem. 2]

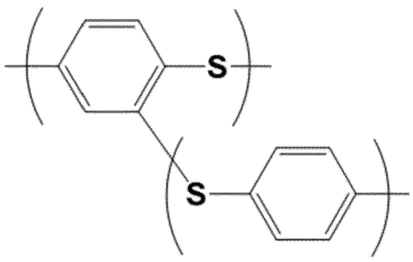
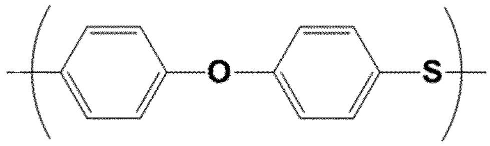
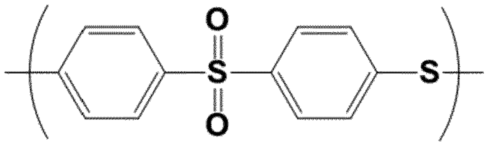
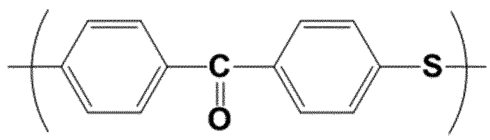
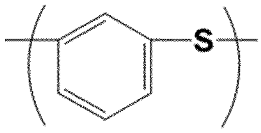
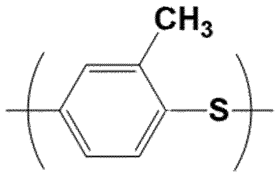
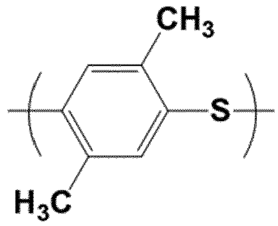

The weight average molecular weight of the PPS resin blended in the PPS resin composition (B) used in the present invention is required to be 20,000 to 60,000 in order to suppress breakage of glass fibers when it is mixed with the crushed molded product (A) to perform various moldings. In order to suppress the breakage of glass fibers, it is preferably 50,000 or less, and more preferably 45000 or less. The PPS resin having such a weight average molecular weight can be obtained by adjusting a molar ratio between the polyhalogenated aromatic compounds and the sulfurizing agent described below, or by adjusting an addition amount of the polymerization aids. Note that the weight average molecular weight used herein is a value calculated in terms of polystyrene by Gel Permeation Chromatography (GPC).

The carboxyl group content of the PPS resin blended in the PPS resin composition (B) used in the present invention is preferably 20 to 400 μmol/g in order to suppress additional breakage of glass fibers at the time of forming a bond between the PPS resin and the glass fiber and mixing with the crushed molded product (A) to perform various moldings. When it is 20 μmol/g or more, breakage is suppressed, and toughness of the PPS resin is improved. When it is 400 μmol/g or less, gas generation during melt-kneading can be suppressed and contamination of voids in the molded product can also be suppressed, which is preferable. From the viewpoint of forming more bonds with the glass fibers and obtaining toughness, 40 μmol/g or more is preferable, and 60 μmol/g or more is more preferable. Further, from the viewpoint of improving heat resistance and chemical resistance, 100 μmol/g or more is still more preferable, and 150 μmol/g or more is particularly preferable. In order to suppress contamination of voids into the molded product to degrade the mechanical properties, the upper limit is preferably 350 μmol/g or less, and more preferably 300 μmol/g or less. The PPS resin having such a carboxyl group content can be obtained by adjusting a molar ratio of a polyhalogenated aromatic compound, a sulfurizing agent, and a polymerization stabilizer described below, or by copolymerizing carboxyl group-containing polyhalogenated aromatic compounds and a monohalogenated compound. Note that the carboxyl group content in the present invention is a value calculated by comparing the carboxyl group-derived absorption around 1,730 $cm^{-1}$ with the benzene ring-derived absorption around 1,900 $cm^{-1}$ by an infrared spectrophotometer (FT-IR).

The blending amount of the PPS resin in the PPS resin composition (B) is required to be 40 to 90 wt% from the viewpoint of attaining both of mechanical properties and fluidity. A plurality of the PPS resins may be used in combination as long as they have these characteristics.

As the PPS resin used in the present invention, the PPS resin obtained by a known method, such as a method including desalting polycondensation using polyhalogenated aromatic compounds and a sulfurizing agent in an organic polar solvent and a method including synthesizing using diiodobenzene and sulfur under melting conditions can be used. The details of the raw materials and the post-processing step of the PPS resin will be explained below.

[Polyhalogenated aromatic compounds]

A polyhalogenated aromatic compound refers to an aromatic compound having two or more halogen atoms in one molecule. Specific examples include dihalo-aromatic compounds such as p-dichlorobenzene, m-dichlorobenzene, o-dichlorobenzene, 1,3,5-trichlorobenzene, 1,2,4-trichlorobenzene, 1,2,4,5-tetrachlorobenzene, hexachlorobenzene, 2,5-dichlorotoluene, 2,5-dichloro-p-xylene, 1,4-dibromobenzene, 1,4-diiodobenzene, and 1-methoxy-2,5-dichlorobenzene. Preferably, p-dichlorobenzene is used.

The amount of polyhalogenated aromatic compounds added is, for example, in a range of 0.9 to 2.0 moles, preferably 0.95 to 1.5 moles, and even more preferably 1.005 to 1.2 moles per mole of sulfurizing agent, from the viewpoint of obtaining a PPS resin with an appropriate weight average molecular weight.

[Monohalogenated aromatic compounds]

A monohalogenated aromatic compound refers to a compound having one halogen atom in one molecule. It may be used in combination with polyhalogenated aromatic compounds to control the molecular weight of the resulting PPS resin and to form a reactive functional groups at its end.

Specific examples of such a monohalogenated compound include monohalogenated compounds such as 2-chlorobenzoic acid, 3-chlorobenzoic acid, 4-chlorobenzoic acid, 2-amino-4-chlorobenzoic acid, 4-chloro-3-nitrobenzoic acid, 4-chlorobenzophenone-2-carboxylic acid, 2-chloroaniline, 3-chloroaniline, 4-chloroaniline, 2-chlorophenol, 3-chlorophenol, and 4-chlorophenol. Among them, 4-chlorobenzoic acid is more preferable from the viewpoint of reactivity during polymerization and versatility. Further, these monohalogenated compounds may be used singly or in combination of two or more kinds thereof.

[Sulfurizing agent]

Examples of the sulfurizing agent include alkali metal sulfides and alkali metal hydrosulfides.

Specific examples of alkali metal sulfides include lithium sulfide, sodium sulfide, potassium sulfide, rubidium sulfide, cesium sulfide, and a mixture of two or more of them. Among them, sodium sulfide is preferably used. These alkali metal sulfides may be used as hydrates or aqueous mixtures, or in anhydrous forms.

Specific examples of alkali metal hydrosulfides include sodium hydrosulfide, potassium hydrosulfide, lithium hydrosulfide, rubidium hydrosulfide, cesium hydrosulfide, and a mixture of two or more of them. Among them, sodium hydrosulfide is preferably used. These alkali metal hydrosulfides may be used as hydrates or aqueous mixtures, or in anhydrous forms.

[Polymerization aids]

In order to obtain the PPS resin having relatively high degree of polymerization in a shorter time, it is also one of preferred embodiments to use a polymerization aid. The polymerization aid used herein means a substance that has an effect of increasing the viscosity of the resulting PPS resin. Specific examples of the polymerization aid include organic carboxylates, water, alkali metal chlorides, organic sulfonates, alkali metal sulfates, alkali earth metal oxides, alkali metal phosphates, and alkali earth metal phosphates. These may be used alone or in combination of two or more. Among them, organic carboxylates, water, and alkali metal chlorides are preferred, and alkali metal carboxylates are preferred as organic carboxylates, and lithium chloride is preferred as an alkali metal chloride.

The above-described alkali metal carboxylates are compounds represented by the general formula: $R(COOM)_n$ (wherein R is a $C_{1-20}$ alkyl group, a cycloalkyl group, an aryl group, an alkylaryl group or an arylalkyl group; M is an alkali metal selected from lithium, sodium, potassium, rubidium, and cesium; and n is an integer from 1 to 3). The alkali metal carboxylates may also be used as hydrates, anhydrides, or aqueous solutions. Specific examples of the alkali metal carboxylate include lithium acetate, sodium acetate, potassium acetate, sodium propionate, lithium valerate, sodium benzoate, sodium phenylacetate, potassium p-toluate, and a mixture thereof.

The amount of such an alkali metal carboxylate as a polymerization aid is generally in a range of 0.01 mol to 2 mol per 1 mol of an alkali metal sulfide that is prepared, and, in terms of obtaining a higher degree of polymerization, preferably in a range of 0.1 mol to 0.6 mol, and more preferably in a range of 0.2 mol to 0.5 mol.

[Post-processing step of PPS resin]

In order to obtain the PPS resin having a certain carboxyl group content, acid treatment is preferably performed after polymerization.

The acid used for the acid treatment of the PPS resin is not particularly limited as long as it does not serve to

decompose the PPS resin, and examples thereof include acetic acid, hydrochloric acid, sulfuric acid, phosphoric acid, silicic acid, carbonic acid, and propyl acid. Among them, acetic acid and hydrochloric acid are more preferably used.

Examples of the method of the acid treatment include a method in which the PPS resin is immersed in an acid or an aqueous acid solution, and optionally stirred and heated as needed. For example, when acetic acid is used, a sufficient effect can be obtained by immersing the PPS resin powder in an aqueous solution at pH 4 heated to 80° C to 200°C and stirring for 30 minutes. The pH after treatment may be 4 or more, for example, about pH 4 to 8. It is preferable to wash the acid-treated PPS resin several times with water or warm water in order to remove residual acids, salts, or the like. The water used for washing is preferably distilled water or deionized water in the sense that it does not impair the effect of chemical modification of the PPS resin by acid treatment.

From the viewpoint of improving the efficiency of the closed-loop recycling, it is preferable that the PPS resin constituting the PPS resin composition (B) and the PPS resin constituting the crushed molded product (A) contain the same PPS resin. The "same PPS resin" used herein means that a ratio of the weight average molecular weight of the PPS resin constituting the crushed molded product (A) to the weight average molecular weight of the PPS resin constituting the PPS resin composition (B) is within a range from 0.8 to 1.2. In addition, it is also preferable to use the PPS resin separated and recovered from the crushed molded product using a method such as solid-liquid separation from the viewpoint of realizing a circular economy. The properties may be adjusted by appropriately using two or more PPS resins in combination.

From the viewpoint of improving the efficiency of closed-loop recycling, it is preferable that the glass fibers constituting the PPS resin composition (B) and the glass fibers constituting the crushed molded product (A) contain the same glass fibers. The "same glass fibers" used herein means that the glass fibers constituting the crushed molded product (A) and the glass fibers constituting the PPS resin composition (B) are in a certain range so that they are treated as having the same composition, such as E-glass. Two or more types of glass fibers may be used in combination. In particular, the PPS resin composition (B) is most preferably a virgin material of the crushed molded product (A) in order to conveniently produce all products from the same raw material. Note that the "virgin material of the crushed molded product (A)" refers to a resin composition constituting the molded product that is a raw material for the crushed molded product (A), the resin composition being not recycled.

The glass fibers constituting the PPS resin composition (B) in the present invention are preferably glass fibers whose surface is pretreated with an epoxy compound or the like to improve superior bundling of the glass fibers and dispersibility during resin blending. When such glass fibers are used in combination with the PPS resin having a carboxyl group content of 20 to 400 μmol/g, interfacial adhesion is improved, and excellent strength improvement effects, heat resistance, and chemical resistance can be obtained.

It is preferable for the glass fiber used in the present invention to be partially pre-treated with a coupling agent such as an isocyanate compound, an organic silane compound, an organic titanate compound, and an organic borane compound from the viewpoint of improving dispersibility and interfacial adhesion.

In addition, using carbon fibers, carbon nanotubes, carbon nanohorns, potassium titanate whiskers, zinc oxide whiskers, calcium carbonate whiskers, wollastonite whiskers, aluminum borate whiskers, as well as fibrous fillers such as aramid fibers, alumina fibers, silicon carbide fibers, ceramic fibers, asbestos fibers, gypsum fibers, and metallic fibers, in combination with the glass fibers, is also effective in the present invention where breakage of the fibrous fillers are suppressed.

Regarding the shape of the glass fiber used in the present invention, the fiber diameter is preferably 1 to 50 μm, more preferably 3 to 30 μm, and still more preferably 5 to 20 μm. The fiber length is preferably 30 μm to 10 mm, and more preferably 50 μm to 5 mm. With the fiber diameter and fiber length within the above-described range, a mechanical strength improvement effect of the resin composition can be obtained, which is preferable.

The blending amount of the glass fiber in the PPS resin composition (B) is required to be in a range of 10 to 60 wt%, from the viewpoint of attaining both strength improvement effect and fluidity. In order to obtain an excellent strength, it is preferably 20 wt% or more, more preferably 30 wt% or more, and particularly preferably 40 wt% or more, and most preferably the blending amount equivalent to that of the glass fiber blended in the crushed molded product (A) from the viewpoint of closed-loop recycling.

The PPS resin composition (B) in the present invention is preferably blended with the olefin copolymer to improve toughness of the resin composition.

Examples of the olefin copolymer include olefin copolymers having at least one functional group selected from the group consisting of an epoxy group, a carboxyl group, an acid anhydride group, an amino group, a hydroxyl group and a mercapto group, which can improve compatibility with the PPS resin, and unmodified olefin copolymers which can dramatically improve toughness. They may be effectively used in combination. Such an olefin copolymer is preferably blended in an amount of 1 to 20 wt% of the total weight of the PPS resin composition, from the viewpoint of attaining both toughness and heat resistance of the glass fiber-reinforced recycled PPS resin composition. Particularly, when the olefin copolymer is blended in the crushed molded product (A), the olefin copolymer is preferably blended in the PPS resin composition (B) as well. From the viewpoint of promoting closed-loop recycling efficiency, the crushed molded product (A) and the PPS resin

composition (B) preferably contain the same olefin copolymer. The "same olefin copolymer" used herein refers to an olefin copolymer constituted by the same monomer components as those constituting the crushed molded product (A). Two or more types of olefin polymers can be used in combination.

The PPS resin composition (B) of the present invention is preferably blended with the organosilane compound. The organosilane compound preferably has at least one functional group selected from the group consisting of an epoxy group, an isocyanate group, an amino group, a hydroxyl group, a mercapto group, an ureide group, and an alkoxy group. Among them, an organosilane compound having at least one functional group selected from an epoxy group, an amino group, and an isocyanate group is preferred from the viewpoint of assisting the formation of a bond between the PPS resin and the glass fiber. Regarding the blending amount of such an organosilane compound, 0.01 to 2 wt% of the total weight of the PPS resin composition (B) is preferably blended from the viewpoint of attaining both reactivity and viscosity control.

In the method of producing a glass fiber-reinforced recycled PPS resin composition in the present invention, it is particularly preferable to use the Glass Long Fiber Reinforced PPS Resin Composite (C) for a part or all of the PPS resin composition (B), from the viewpoint of restoring the length of the glass fibers which have been broken and dramatically improving mechanical properties.

The Glass Long Fiber Reinforced PPS Resin Composite (C) is a resin composition containing glass fiber bundles aligned in the length direction of the pellets of the PPS resin, in which the length of the pellet substantially corresponds to the fiber length of the glass fiber bundle.

The content of the glass fiber bundles in the PPS resin is preferably 10 to 80 wt% from the viewpoint of strength reinforcement effect and dispersibility of fiber bundles; and preferably 20 wt% or more, more preferably 30 wt% or more, and still more preferably 40 wt% or more from the viewpoint of efficiently compensating for the broken glass fibers in the crushed molded product (A). The content is preferably 70 wt% or less, and more preferably 60 wt% or less, from the viewpoint of poor supply to the extruder due to fluffing of the Glass Long Fiber Reinforced PPS Resin Composite.

From the viewpoint of improving the efficiency of the closed-loop recycling, it is preferable that the PPS resin constituting the Glass Long Fiber Reinforced PPS Resin Composite (C) and the PPS resin constituting the crushed molded product (A) contain the same PPS resin. On the other hand, in order to ensure the fluidity of the glass fiber-reinforced recycled PPS resin composition, which is deteriorated by the glass fiber bundle, it is preferable to use the PPS resin having a lower molecular weight than the PPS resin constituting the crushed molded product (A) as needed, provided that the Mw is within a range from 20,000 to 60,000. In addition, the PPS resin preferably has a carboxyl group, an amino group, a hydroxyl group, an epoxy group, a carbodiimide structure, a urea structure, a urethane structure, or the like so that it can easily form a bond with the glass fiber. From the viewpoint of reactivity, the PPS resin more preferably has at least one selected from a carboxyl group, an epoxy group, and a carbodiimide structure, and particularly preferably contains 20 to 400 μmol/g of carboxyl group.

The Glass fiber constituting the Glass Long Fiber Reinforced PPS Resin Composite (C) are preferably a glass fiber whose surface is pre-treated with an epoxy compound or the like, to improve superior bundling of the glass fibers and dispersibility during the resin blending. Such a glass fiber has improved interfacial adhesion with the PPS resin having the functional group and improved dispersibility, and thus provides high strength improvement effect, heat resistance, and chemical resistance. From the viewpoint of improving the efficiency of the closed-loop recycling, the Glass fibers constituting the Glass Long Fiber Reinforced PPS Resin Composite (C) preferably contains the same glass fibers as those constituting the crushed molded product (A). The glass fiber diameter is preferably 1 to 50 μm, more preferably 3 to 30 μm, and still more preferably 5 to 20 μm. With smaller glass fiber diameter, a tensile strength improvement effect and a flexural strength improvement effect can be obtained. With larger fiber diameter, the fiber is less likely to be broken during molding and an impact strength improvement effect can be obtained, and the impregnation property of the resin tends to be improved due to increase of voids between fibers. With the fiber diameter within the above-described range, both mechanical properties and impregnation properties can be attained, which is preferable.

The Glass Long Fiber Reinforced PPS Resin Composite (C) is preferably blended in an olefin copolymer, when the crushed molded product (A) is blended in the olefin copolymer. Examples of the olefin copolymer include compounds similar to those blended in the PPS resin composition (B). From the viewpoint of promoting closed-loop recycling efficiency, the olefin copolymer preferably contains the same olefin copolymer as that blended in the crushed molded product (A). The Glass Long Fiber Reinforced PPS Resin Composite (C) is preferably blended with 1 to 20 wt% of the olefin copolymer, and more preferably 3 wt% or more, and still more preferably 5 wt% or more of the olefin copolymer, from the viewpoint of obtaining excellent toughness.

When the olefin copolymer is blended with the Glass Long Fiber Reinforced PPS Resin Composite (C), it is preferable that the PPS resin forms a continuous phase, and the olefin copolymers form a dispersed phase in which they are dispersed with a number average dispersion diameter of 500 nm or less. From the viewpoint of increasing toughness, the number average dispersion diameter of the olefin copolymer is more preferably 300 nm or less.

In order to obtain such a number average dispersion diameter, it is effective to appropriately react the PPS resin with the olefin copolymer having at least one functional group selected from the group consisting of an epoxy group, a carboxyl group, an acid anhydride group, an amino group, a hydroxyl group, and a mercapto group. Regarding

appropriately reacting, for example, when the amount of the functional group is too small, the reaction between the PPS resin and the olefin copolymer will be insufficient and the number average dispersion diameter will be 500 nm or more. In addition, when the temperature at which the PPS resin is reacted with the olefin copolymer is too high, gelation occurs, resulting in the number average dispersion diameter of 500 nm or more.

Note that the number average dispersion diameter is determined by the following method. Ultra-thin sections are cut from the pellets of the Glass Long Fiber Reinforced PPS Resin Composite (C) using an ultramicrotome, and unstained samples of the ultra-thin sections are observed using a transmission electron microscope at a magnification of 5,000 to 10,000 x. Ten arbitrary different dispersed phases are selected from the resulting images, the major axis and minor axis are determined for each dispersed phase and averaged, and the number average value of those average values is calculated as the number average dispersion diameter of the dispersed phase. The components constituting the dispersed phase can be identified by the phase contrast difference in the unstained sample.

From the viewpoint of realizing the closed-loop recycling, it is preferable that the crushed molded product (A), the PPS resin composition (B), and the Glass Long Fiber Reinforced PPS Resin Composite (C) have substantially the same composition. "Substantially the same composition" means that the crushed molded product (A) and the PPS resin composition (B) have substantially the same composition, and the crushed molded product (A) and the Glass Long Fiber Reinforced PPS Resin Composite (C) have substantially the same composition. When the Glass Long Fiber Reinforced PPS Resin Composite (C) is used for all of the PPS resin composition (B), it is sufficient that the crushed molded product (A) and the Glass Long Fiber Reinforced PPS Resin Composite (C) have substantially the same composition. Furthermore, "the crushed molded product (A) and the PPS resin composition (B) have substantially the same composition" means that the percentage (%) of the value obtained by dividing the ash content in the PPS resin composition (B) subtracted from the ash content in the crushed molded product (A) by the ash content in the PPS resin composition (B) is - 20% to 20%, and the percentage (%) of the value obtained by dividing the density (unit: $g/cm^3$) of the PPS resin composition (B) subtracted from the density of the crushed molded product (A) by the density of the PPS resin composition (B) is - 20% to 20%. From the viewpoint of suppressing changes in the quality of the molded product obtained by molding the glass fiber-reinforced recycled PPS resin composition, the respective lower limit is preferably - 15% or more, more preferably - 10% or more, and the upper limit is preferably 15% or less, more preferably 10% or less. Further, from the viewpoint of suppressing changes in moldability, the lower limit is more preferably - 5% or more, and the upper limit is more preferably 5% or less.

Note that the ash content is the percentage (%) of the value calculated by dividing the weight of the residue obtained by calcining the crushed molded product (A) or the PPS resin composition (B) at 550°C for 3 hours by the weight before calcining.

The length of the pellets of the Glass Long Fiber Reinforced PPS Resin Composite (C) is preferably 3.0 to 50 mm from the viewpoint of strength improvement effect and handling properties, and preferably 20 mm or less, more preferably 10 mm or less from the viewpoint of mixability with the crushed molded product (A) and the PPS resin composition (B), and particularly preferably 7 mm or less from the viewpoint of suppressing classification.

Such a Glass Long Fiber Reinforced PPS Resin Composite (C) can be obtained by a direct roving method in which continuous glass fiber bundles are directly charged in an extruder, a pultrusion method in which continuous glass fiber bundles are impregnated with the resin, or a method in which continuous glass fiber bundles are coated with the resin. Since a PPS resin identical to or having fluidity similar to that of the PPS resin constituting the crushed molded product (A) is preferably used as the PPS resin that serves as a matrix, the Glass Long Fiber Reinforced PPS Resin Composite (C) is preferably produced by a method in which the fluidity of the matrix resin is less likely to be limited.

In particular, when an olefin copolymer is blended in the Glass Long Fiber Reinforced PPS Resin Composite (C), the pultrusion method in which a continuous glass fiber bundles are impregnated with the resin is not preferred. The reason is as follows. The olefin copolymer has a high molecular weight and high viscosity, resulting in poor impregnation properties. In addition, when the production temperature is set to a high temperature to improve fluidity of the PPS resin, thermal deterioration and gelation of the olefin copolymer occur.

The Glass Long Fiber Reinforced PPS Resin Composite (C) is preferably produced as a core sheath structure in which a glass fiber bundle as a core structure is arranged such that its periphery is coated with the PPS resin and optionally with the resin composition blended with an olefin copolymer. In general, the core sheath structure produced in the manner of electric wire coating has poor dispersibility of continuous fibers, and therefore poor dispersion of fibers is often observed in the molded products obtained by various types of molding. Therefore, in order to improve dispersibility of the fibers, it is preferable to blend an organosilane compound in the PPS resin composition which is a coating layer, and optionally in the resin composition containing an olefin copolymer. The organosilane compound preferably has at least one functional group selected from the group consisting of an epoxy group, an isocyanate group, an amino group, a hydroxyl group, a mercapto group, an ureide group, and an alkoxy group. Among them, from the viewpoint of assisting improvement of the dispersibility by forming bonds with glass fibers starting from the carboxyl group of the PPS resin, the organosilane compound having at least one functional group selected from an epoxy group, an amino group, and an isocyanate group is preferred, and from the viewpoint of rapidly dispersing the glass fibers in the PPS resin in the course of the various types of moldings, the organosilane compound preferably has an amino group or an isocyanate group.

Regarding the blending amount of such an organosilane compound, 0.01 to 5 wt% of the total weight of the Glass Long Fiber Reinforced PPS Resin Composite (C) is preferably blended from the viewpoint of attaining both reactivity and fluidity. The lower limit is preferably 0.1 wt% or more, more preferably 0.5 wt% or more, from the viewpoint of improving adhesion between the PPS resin and glass fibers and dispersibility. The upper limit is preferably 3.0 wt% or less, more preferably 1.5 wt% or less, from the viewpoint of suppressing excessive increase in viscosity to improve dispersibility of the glass fibers.

The Glass Long Fiber Reinforced PPS Resin Composite (C) having the core sheath structure and containing the olefin copolymer not only has excellent dispersibility of the glass fibers, but also has excellent dispersibility of the olefin copolymer, and the PPS resin readily forms a continuous phase, and the olefin copolymers readily forms a dispersed phase in which they are dispersed at the number average dispersion diameter of 500 nm or less. Accordingly, the properties of the glass fiber-reinforced recycled PPS resin composition can be dramatically improved.

The crushed molded product (A), the PPS resin composition (B), and the Glass Long Fiber Reinforced PPS Resin Composite (C) may be blended with, as non-fiber fillers, fullerene, silicates such as talc, wollastonite, zeolite, sericica, kaolin, clay, pyrophyllite, silica, bentonite, asbestos, and alumina silicate, metal compounds such as silicon oxide, magnesium oxide, alumina, zirconium oxide, titanium oxide, and iron oxide, carbonates such as calcium carbonate, magnesium carbonate, and dolomite, sulfates such as calcium sulfate and barium sulfate, hydroxides such as calcium hydroxide, magnesium hydroxide, aluminum hydroxide, glass beads, glass flakes, glass powder, ceramic beads, boron nitride, silicon carbide, carbon black and silica, graphite, and the like. These inorganic fillers may be hollow. Further, two or more types may be used in combination. Further, two or more types may be used in combination. Furthermore, these inorganic fillers may be pre-treated with a coupling agent such as an isocyanate compound, an organic silane compound, an organic titanate compound, an organic borane compound, and an epoxy compound before use. Among them, magnesium hydroxide, calcium carbonate and silica, and carbon black are preferred from the viewpoint of effects of imparting electrical properties, anticorrosive materials, lubricating material, and electrical conductivity.

When the above-described non-fiber filler is blended with the Glass Long Fiber Reinforced PPS Resin Composite (C), the pultrusion method in which the continuous glass fiber bundles are impregnated with the resin is not preferred. It is because blending the non-fiber filler increases viscosity, resulting in poor impregnation properties. In this case, as described above, the Glass Long Fiber Reinforced PPS Resin Composite (C) is preferably produced as a core sheath structure in which a glass fiber bundle as a core structure is arranged such that its periphery is coated with a resin composition containing the PPS resin and the non-fiber filler, and the PPS resin as a coating layer and the resin composition including the non-fiber filler are preferably blended with the organosilane compound from the viewpoint of improving dispersibility of the glass fibers during molding of the Glass Long Fiber Reinforced PPS Resin Composite (C). As the organosilane compound, compounds that are preferably used in the Glass Long Fiber Reinforced PPS Resin Composite (C) described above are preferred.

The crushed molded product (A), the PPS resin composition (B), and the Glass Long Fiber Reinforced PPS Resin Composite (C) of the present invention may be blended with phenolic antioxidants, phosphorus antioxidants, sulfur antioxidants, plasticizers such as organophosphorus compounds, organic phosphorus compounds, crystal nucleating agents such as polyetheretherketone, montanic acid waxes, metallic soap such as lithium stearate and aluminum stearate, ethylenediamine-stearic acid-sebacic acid polycondensates, mold releasing agents such as silicone compounds, and other conventional additives such as water, lubricants, UV inhibitors, colorants, and foaming agents. Such an additive is preferably blended in an amount of 0.01 to 5 wt%.

The glass fiber-reinforced recycled PPS resin composition obtained by the production method of the present invention is containing 40 to 90 wt% of the PPS resin having the weight average molecular weight of 20,000 to 60,000 and 10 to 60 wt% of the glass fibers.

Further, the molded product obtained by molding the glass fiber-reinforced recycled PPS resin composition is characterized by the ratio between the weight average fiber length (Lw) and the number average fiber length (Ln) (hereinafter referred to as Lw/Ln) of the glass fiber contained therein being 1.3 or more and 4.0 or less.

The blending amount of the glass fiber described above in the glass fiber-reinforced recycled PPS resin composition is preferably 20 wt% or more, more preferably 30 wt% or more, and still more preferably 40 wt% or more, in order to obtain excellent strength.

The molded product obtained by molding the glass fiber-reinforced recycled PPS resin composition obtained by the present invention, in which the length of the broken glass fiber of the crushed molded product (A) is restored, not only has less degraded mechanical properties compared to a virgin material of the crushed molded product (A), but also has Lw/Ln in a certain range. The larger Lw/Ln indicates that longer fiber length glass fibers remain with respect to shorter glass fibers, and it is possible to favorably change the orientation of the glass fibers while suppressing the decrease in fluidity, which allows to develop properties that surpass even the properties of the virgin material of the crushed molded product (A). The Lw/Ln is preferably 1.5 or more, more preferably 1.7 or more, and still more preferably 2.0 or more, from the viewpoint of attaining both of mechanical properties and fluidity. The Lw/Ln is preferably 3.5 or less, more preferably 3.0 or less, from the viewpoint of quality stability of the molded product. The crushed molded product (A) is mixed with the PPS

resin composition (B) having a Glass Fiber Length Distribution different from that of the crushed molded product while adjusting the type and amount thereof, and thus the Lw/Ln can be adjusted so that the fiber length distribution of the glass fibers of the resulting molded product is multimodal.
In particular, using the Glass Long Fiber Reinforced PPS Resin Composite (C) for a part or all of the PPS resin composition (B) can increase Lw/Ln.

The weight average fiber length of the glass fiber of the molded product obtained by molding the glass fiber-reinforced recycled PPS resin composition is preferably 50 to 5000 μm from the viewpoint of ensuring excellent mechanical properties and fluidity. It is preferably 100 μm or more, more preferably 200 μm or more from the viewpoint of obtaining excellent mechanical properties, and still more preferably 300 μm or more from the viewpoint of use in applications of metal substitutes. When the Lw/Ln is in a preferable range, it is more preferably 400 μm or more, and particularly preferably 500 μm or more, since both mechanical properties and fluidity can be attained. Further, it is preferably 4000 μm or less, more preferably 3000 μm or less, and particularly preferably 2000 μm or less, from the viewpoint of obtaining excellent fluidity.

The weight average fiber length (Lw) and the number average fiber length (Ln) of the glass fibers used herein are obtained as follows. Resin composition pellets or ISO(1A) molded products obtained by injection molding the resin composition pellets were calcined to obtain glass fibers. An image of the glass fibers, magnified 50 to 100 x, was observed with an optical microscope, and 1000 glass fibers were randomly selected and measured for length, and the measured values (μm) were used to calculate the weight average fiber length (Lw) and the number average fiber length (Ln) based on the following equations:

$$\text{Number average fiber length (Ln)} = \Sigma(\text{Li} \times \text{ni})/\Sigma\text{ni}$$

$$\text{Weight average fiber length (Lw)} = \Sigma(\text{Li}^2 \times \text{ni})/\Sigma(\text{Li} \times \text{ni})$$

Li: Fiber length of glass fiber
ni: Number of glass fibers having fiber length of Li.

The glass fiber-reinforced recycled PPS resin composition obtained in the present invention is preferably blended with the olefin copolymer in order to develop excellent toughness. Examples of the olefin copolymer include compounds similar to those blended with the PPS resin composition (B). In addition, the olefin copolymer is preferably blended in an amount of 1 to 20 wt%, and the upper limit is preferably 10 wt% or less.

The phase-separated structure of the molded product obtained by molding the glass fiber-reinforced recycled PPS resin composition and the glass fiber-reinforced recycled PPS resin composition obtained in the present invention is preferably such that the PPS resin forms a continuous phase and the olefin copolymer forms a dispersed phase in which it is dispersed with a number average dispersion diameter of 500 nm or less, and preferably 300 nm or less from the viewpoint of increasing toughness.

In order to obtain such a number average dispersion diameter, each of the crushed molded product (A), the PPS resin composition (B), and the Glass Long Fiber Reinforced PPS Resin Composite (C) preferably has the number average dispersion diameter within the above described range when blended with the olefin copolymer. Especially, since the Glass Long Fiber Reinforced PPS Resin Composite (C) suppresses the increase in the number average dispersion diameter due to gelation of the olefin polymer, it particularly preferably has the above-described core sheath structure.

The glass fiber-reinforced recycled PPS resin composition obtained in the present invention may be blended with, as non-fiber fillers, fullerene, silicates such as talc, wollastonite, zeolite, sericica, kaolin, clay, pyrophyllite, silica, bentonite, asbestos, and alumina silicate, metal compounds such as silicon oxide, magnesium oxide, alumina, zirconium oxide, titanium oxide, and iron oxide, carbonates such as calcium carbonate, magnesium carbonate, and dolomite, sulfates such as calcium sulfate and barium sulfate, hydroxides such as calcium hydroxide, magnesium hydroxide, aluminum hydroxide, glass beads, glass flakes, glass powder, ceramic beads, boron nitride, silicon carbide, carbon black and silica, graphite, and the like. These inorganic fillers may be hollow. Further, two or more types may be used in combination. Furthermore, these inorganic fillers may be pre-treated with a coupling agent such as an isocyanate compound, an organic silane compound, an organic titanate compound, an organic borane compound, and an epoxy compound before use. Among them, magnesium hydroxide, calcium carbonate and silica, and carbon black are preferred from the viewpoint of effects of imparting electrical properties, anticorrosive materials, lubricating material, and electrical conductivity.

The crushed molded product (A) constituting the glass fiber-reinforced recycled PPS resin composition of the present invention may be a crushed molded product that has been recycled multiple times so long as it has the above-described properties, and more preferably a molded product recovered after having been used as a product in the market

from the viewpoint of realizing circular economy. More preferably, it is constituted by a molded product obtained by molding the glass fiber-reinforced recycled PPS resin composition of the present invention. That is, it is more preferable that a molded product obtained by molding the glass fiber-reinforced recycled PPS resin composition of the present invention is recovered after having been used as a product, and used again as the crushed molded product (A).

The flexural strength of the glass fiber-reinforced recycled PPS resin composition obtained by the production method of the present invention depends on the compositional ratio and the types of the raw materials, so it is difficult to make generalization, but is preferably 150 MPa or more and 400 MPa or less as measured according to ISO178 (2010) from the viewpoint of ensuring excellent mechanical properties and fluidity. It is preferably 200 MPa or more, more preferably 230 MPa or more from the viewpoint of obtaining more excellent mechanical properties, and particularly preferably 250 MPa or more, still more preferably 270 MPa or more from the viewpoint of use in applications of metal substitutes. Further, it is preferably 350 MPa or less from the viewpoint of obtaining more excellent fluidity. The flexural strength can be increased by increasing the blending amount of the glass fiber or by suppressing breakage of glass fiber.

The tensile strength of the glass fiber-reinforced recycled PPS resin composition obtained by the production method of the present invention depends on the compositional ratio and the types of the raw materials, so it is difficult to make generalization, but is preferably 100 MPa or more and 350 MPa or less as measured according to ISO527-1, -2 (2012) from the viewpoint of ensuring excellent mechanical properties and fluidity. It is preferably 150 MPa or more, more preferably 160 MPa or more from the viewpoint of obtaining more excellent mechanical properties, and particularly preferably 180 MPa or more, still more preferably 200 MPa or more from the viewpoint of use in applications of metal substitutes. Further, it is preferably 300 MPa or less from the viewpoint of obtaining more excellent fluidity. The tensile strength can be increased by increasing the blending amount of the glass fiber, by suppressing breakage of glass fiber, or forming a bond between the PPS resin and the glass fiber to increase interfacial adhesion.

Notched Charpy Impact Strength of the glass fiber-reinforced recycled PPS resin composition obtained by the production method of the present invention depends on the compositional ratio and the types of the raw materials, so it is difficult to make generalization, but is preferably 3 $kJ/m^2$ or more and 40 $kJ/m^2$ or less as measured according to ISO179 (2010) from the viewpoint of ensuring excellent mechanical properties and fluidity. It is preferably 7 $kJ/m^2$ or more, more preferably 10 $kJ/m^2$ or more from the viewpoint of obtaining more excellent mechanical properties, and particularly preferably 15 $kJ/m^2$ or more, still more preferably 20 $kJ/m^2$ or more from the viewpoint of use in applications of metal substitutes. Further, it is preferably 35 $kJ/m^2$ or less from the viewpoint of obtaining more excellent fluidity. The Notched Charpy Impact Strength can be increased by increasing the blending amount of the glass fiber, by suppressing breakage of glass fiber, or blending the olefin copolymer.

The tensile strength, flexural strength, and Charpy impact strength of the glass fiber-reinforced recycled PPS resin composition is preferably in a range of 0.80 to 2.00 times the respective mechanical properties of the virgin material of the crushed molded product (A). In order to expand the range of application of the recycled materials, it is preferably 0.85 times or more, more preferably 0.90 times or more. From the viewpoint of use in applications equivalent to those of the virgin materials, it is particularly preferably 0.95 times or more, and still more preferably 0.98 times or more. From the viewpoint of obtaining moldability equivalent to those of the virgin materials, it is preferably 1.80 times or less, more preferably 1.60 times or less. From the viewpoint of use in applications equivalent to those of the virgin materials, it is particularly preferably 1.40 times or less, and still more preferably 1.20 times or less.

The glass fiber-reinforced recycled PPS resin composition obtained by the production method of the present invention is applicable to various molding methods, for example, extrusion molding, injection molding, hollow molding, calendar molding, compression molding, vacuum molding, foam molding, blow molding, and rotational molding.

Since the glass fiber-reinforced recycled PPS resin composition obtained by the production method of the present invention has excellent heat resistance and mechanical properties, PPS resin composition, it can be applied to known applications found in many patents relating to the PPS resin compositions, in particular, preferably to automotive parts applications where demands for circular economy is increasing. Examples

Hereinafter, the present invention will be specifically described with reference to Examples, however, the present invention is not intended to be limited to such Examples. Evaluations in each Example and Comparative Example were performed by the following method.

(1) Analysis of weight average molecular weight

The molecular weight of the PPS resin was measured by Gel Permeation Chromatography (GPC), a type of Size Exclusion Chromatography (SEC), to determine weight average molecular weight (Mw) in terms of polystyrene. Conditions for GPC measurement will be listed below.

Apparatus: SSC-7100 manufactured by Senshu Scientific Co., Ltd.
Column name: GPC3506 manufactured by Senshu Scientific Co., Ltd.
Eluent: 1-Chloronaphthalene

Detector: differential refractive index detector
Column temperature: 210°C
Detector temperature: 210°C
Flow rate: 1.0 mL/min.

(2) Analysis of functional group (carboxyl group) content

The amount of carboxyl groups in the PPS resin was estimated by making an amorphous film of the PPS resin under the following conditions, preforming an FT-IR (IR-810 infrared spectrophotometer manufactured by JASCO Corporation) measurement, and comparing the carboxyl group-derived absorption around 1,730 $cm^{-1}$ to the benzene ring-derived absorption around 1,900 $cm^{-1}$ for estimation.

Conditions for producing amorphous film will be described below.

(a) A sample is sandwiched between polyimide films and inserted in a press mold heated to 340°C.
(b) After 1 minute retention, the sample is pressed with a load of 10 kgf, and after 3-minute retention, pressed with a load of 40 kgf.
(c) the sample is removed along with the polyimide films, rapidly cooled with water to obtain an amorphous film with a thickness of about 50 to 300 μm.

(3) Production of specimen by injection molding

The resin composition obtained in each of Examples and Comparative Examples was dried in a hot-air dryer at 130°C for 3 hours, and an ISO (1A) dumbbell specimen was injection molded using an injection molding machine SE75-DUZ manufactured by Sumitomo Heavy Industries, Ltd. under conditions of a cylinder temperature of 310°C, a mold temperature of 140°C, and screw rotation speed of 100 rpm. The injection pressure at this time was used as a fluidity index of the resin composition.

(4) Mechanical properties

The ISO (1A) dumbbell specimen obtained in (3) described above was evaluated for tensile properties at 23°C, using an Autograph AG-X plus 20 kN tester, according to ISO527-1,-2 (2012), with a distance between fulcrums of 114 mm and tensile speed of 5 mm/min.

Next, the ISO (1A) dumbbell specimen obtained in (3) described above was evaluated for flexural properties according to ISO178(2010), with a distance between fulcrums of 64 mm and a speed of 2 mm/min.

Next, a specimen obtained by cutting the ISO (1A) dumbbell obtained in (3) described above was evaluated for Notched Charpy Impact Strength according to ISO179 (2010).

(5) Analysis for glass fiber length

The ISO (1A) dumbbell specimen obtained in (3) described above was cut, and a 1-cm cube was removed from the center, weighed as a sample, then placed in a crucible, and calcined in an electric furnace set at 550°C for 3 hours to obtain a glass fiber residue. The residue was weighed and the ash content was determined by calculating the weight percentage of the glass fiber to the sample weight before calcining. An image of the residue, magnified 50 to 100 x, was observed with an optical microscope, and 1000 glass fibers were randomly selected and measured for length, and the measured values (μm) were used for calculation based on the following equations:

$$\text{Number average fiber length } (Ln) = \Sigma(Li \times ni)/\Sigma ni$$

$$\text{Weight average fiber length } (Lw) = \Sigma(Li^2 \times ni)/\Sigma(Li \times ni)$$

Li: Fiber length of fibrous filler
ni: Number of fibrous fillers having fiber length of Li

(6) Odor level

Glass fiber-reinforced recycled PPS resin composition pellets dried in a hot-air dryer at 130°C for 3 hours were

filled in an injection molding machine SE75-DUZ manufactured by Sumitomo Heavy Industries, Ltd. set at a cylinder temperature of 310°C, and an operation of measuring and then purging until the screw retraction position was 80 mm was repeated three times to obtain a massive molten resin. The resulting molten resin was immediately placed at positions, each at a distance between the molten resin and a subject of 50 cm, 1 m, or 2 m, and difference in odor was evaluated with respect to those using the resin pellets without containing the crushed molded products (PPS resin composition (B-1) described in Reference Example 4 below). Five subjects were asked to rate the odor on the following five-point scale, and the average of the five scores was considered as the odor level.

1: No difference in odor from virgin material is perceived even at 50 cm.
2: Difference in odor is slightly perceived at 50 cm, but no difference in odor is perceived at 1 m.
3: Difference in odor is perceived at 50 cm, but no difference in odor is perceived at 1 m.
4: Difference in odor is perceived at 1 m, but no difference in odor is perceived at 2 m.
5: Difference in odor from virgin material is perceived even at 2 m.

(7) Density measurement

Density (unit: g/cm$^3$) was determined in accordance with ISO1183 (2019) using resin composition pellets obtained in each of Examples and Comparative Example or the ISO (1A) dumbbell test specimen obtained in section (3) described above.

(8) Dispersibility test

The ISO(1A) dumbbell specimens obtained in (3) described above were visually evaluated, and evaluated on the following 3-point scale depending on the number of specimens which were observed to have poor dispersion with glass fiber bundles of 1 cm or more.

Best: 0 out of 50 specimens;
Good: 1 to 3 out of 50 specimens;
Bad: 4 or more out of 50 specimens.

(9) Number average dispersion diameter of olefin copolymer (observation of phase-separated structure)

The central part of the ISO (1A) dumbbell specimen obtained in (3) described above was cut in a direction perpendicular to the flow direction of the resin, and a thin section with a thickness of 0.1 μm or less was cut from the center of the cross section at a temperature of -20°C using an ultramicrotome. A transmission electron microscope H-7100 manufactured by Hitachi, Ltd. (resolution (particle image) 0.38 nm; magnification, 50 to 600,000 x) was used to take pictures of 10 arbitrary different locations on these samples at magnifications of 1,000 to 10,000 x. An image analysis software, "Scion Image" created by Scion Corporation was used, 10 arbitrary different dispersed particles were selected from the dispersed particles of the olefin copolymer present in an electron micrograph, a major axis and a minor axis of each of the dispersed particle were determined and an average was taken as a particle diameter of the dispersed particle, and a number average of the particle diameter of these 10 dispersed particles was taken as a number average dispersion diameter. The components constituting the dispersed phase were identified by the phase contrast difference in the unstained sample.

Raw materials used for Examples and Comparative Examples will be described below.

[Reference Example 1] (b-1) Polyphenylene sulfide resin

8.27 kg (70.00 mol) of 47.5% sodium hydrosulfide, 2.94 kg (70.63 mol) of 96% sodium hydroxide, 11.45 kg (115.50 mol) of N-methyl-2-pyrrolidone (NMP), 0.513 kg (6.25 mol) of sodium acetate, and 3.82 kg of ion exchanged water were charged in a 70 L autoclave equipped with a stirrer and a bottom stop valve, gradually heated to 245°C over about 3 hours while passing nitrogen under ordinary pressure, 8.09 kg of water and 0.28 kg of NMP were distilled off, and then the reaction vessel was cooled to 200°C. The amount of water remaining in the system per mole of the prepared alkali metal sulfide was 1.06 moles including the water consumed in the hydrolysis of NMP. The amount of scattered hydrogen sulfide was 0.02 mole per mole of the prepared alkali metal sulfide.

Then, after cooling to 200°C, and adding 10.34 kg(70.32 mol) of p-dichlorobenzene and 9.37 kg (94.50 mol) of NMP, the reaction vessel was sealed under nitrogen gas, heated from 200°C to 270°C at a rate of 0.6 °C/min while stirring at 240 rpm, and reacted at 270°C for 140 minutes. Then, 2.67 kg (148.4 mol) of water was injected under pressure while cooling from 270°C to 250°C over 15 minutes. After gradually cooling from 250°C to 220°C over 75 minutes and then

rapidly cooling to about room temperature, the contents were removed.

The contents were diluted with about 35 liters of NMP and stirred as a slurry at 85°C for 30 minutes, then filtered through an 80-mesh wire gauze (aperture, 0.175 mm) to obtain a solid. The resulting solid was washed and filtered with about 35 liters of NMP in the same manner. The resulting solid was diluted with 70 liters of ion exchanged water, stirred at 70°C for 30 minutes, and then filtered through an 80-mesh wire gauze to recover solid, and such an operation was repeated three times in total. The resulting solid and 32 g of acetic acid were diluted with 70 liters of ion exchanged water, stirred at 70°C for 30 minutes, then filtered through an 80-mesh wire gauze, and the resulting solid was further diluted with 70 liters of ion exchanged water, stirred at 70°C for 30 minutes, and filtered through an 80-mesh wire gauze to recover solid. The solid obtained as described above was dried at 120°C under a nitrogen stream to obtain dried PPS.

The resulting PPS resin (b-1) had a weight average molecular weight of 40,000, and a carboxyl group content of 40 μmol/g.

[Reference Example 2] (b-2) Polyphenylene sulfide resin

PPS was obtained in the same manner as in Reference Example 1, except that acetic acid was not used for washing.

The resulting PPS resin (b-2) had a weight average molecular weight of 40,000, and a carboxyl group content of 0 μmol/g.

[Reference Example 3] (b-3) Polyphenylene sulfide resin

PPS was obtained in the same manner as in Reference Example 1, except that 2.24 kg (27.3 mol) of sodium acetate was used.

The resulting PPS resin (b-3) had a weight average molecular weight of 75000, and a carboxyl group content of 30 μmol/g.

(c-1) Glass fiber: Chopped glass sized with a novolac epoxy compound having fiber length of 3 mm and average fiber diameter of 10.5 μm was used (T-747H, manufactured by Nippon Electric Glass Co., Ltd.)

(c-2) Glass fiber bundle: Roving glass sized with an epoxy compound having average fiber diameter of 17 μm was used (T-739N, manufactured by Nippon Electric Glass Co., Ltd.)

(d-1) Epoxy group-containing olefin copolymer: Ethylene-glycidyl methacrylate copolymer ("BONDFAST" E, manufactured by Sumitomo Chemical Company, Limited) was used.

(d-2) Unmodified olefin copolymer: Ethylene-1-butene copolymer ("TAFMER "A4085, manufactured by Mitsui Chemicals Inc.) was used.

(e-1) Epoxy group-containing organosilane compound: 2-(3,4-epoxycyclohexyl)ethyltrimethoxysilane (KBM303, manufactured by Shin-Etsu Chemical Co., Ltd.) was used.

(e-2) Amino group-containing organosilane compound: 3-aminopropyltriethoxysilane (KBE903, manufactured by Shin-Etsu Chemical Co., Ltd.) was used.

(e-3) Isocyanate group-containing organosilane compound: 3-isocyanate propyltriethoxysilane (KBE9007, manufactured by Shin-Etsu Chemical Co., Ltd.) was used.

[Reference Example 4] (B-1) Polyphenylene sulfide resin composition (virgin material)

60 wt% of the PPS resin (b-1), 40 wt% of the glass fiber (c-1), and 0.3 parts by weight of an epoxy group-containing organosilane compound (e-1), with a total of the PPS resin (b-1) and the glass fiber (c-1) being 100 parts by weight, were melt-kneaded using a TEX30α twin screw extruder (L/D = 45, 3 kneading parts) manufactured by The Japan Steel Works Ltd. equipped with a vacuum vent at a cylinder temperature of 300°C and a screw rotation speed of 200 rpm to obtain the PPS resin composition (B-1).

[Reference Example 5] (B-2) Polyphenylene sulfide resin composition (virgin material)

PPS resin composition (B-2) was obtained in the same manner as in Reference Example 4, except that 65 wt% of the PPS resin (b-1), 30 wt% of the glass fiber (c-1), 2.5 wt% of an epoxy group-containing olefin copolymer (d-1), 2.5 wt% of an unmodified olefin copolymer (d-2), and 0.3 parts by weight of an epoxy group-containing organosilane compound (e-1), with a total of the PPS resin (b-1), the glass fiber (c-1), the epoxy group-containing olefin copolymer (d-1), and the unmodified olefin copolymer (d-2) being 100 parts by weight, were mixed.

[Reference Example 6] (B-3) Polyphenylene sulfide resin composition (virgin material)

PPS resin composition (B-3) was obtained in the same manner as in Reference Example 4, except that the PPS resin used was b-2.

[Reference Example 7] (B-4) Polyphenylene sulfide resin composition (virgin material)

PPS resin composition (B-4) was obtained in the same manner as in Reference Example 4, except that the PPS resin used was b-3.

[Reference Example 8] (A-1) Crushed molded product

The PPS resin composition (B-1) was dried in a hot-air dryer at 130°C for 3 hours, and an ISO (1A) dumbbell specimen was injection molded using an injection molding machine SE75-DUZ manufactured by Sumitomo Heavy Industries, Ltd. under conditions of a cylinder temperature of 310°C, a mold temperature of 140°C, and screw rotation speed of 100 rpm. The sprues/runners (corresponding to molded products) generated in the process were crushed in a crusher so that the major axis dimension was 20 mm or less to obtain the crushed molded product (A-1).

[Reference Example 9] (A-2) Crushed molded product

Crushed molded product (A-2) was obtained in the same manner as in Reference Example 8, except that the PPS resin composition used was (B-2).

[Reference Example 10] (A-3) Crushed molded product

Crushed molded product (A-3) was obtained in the same manner as in Reference Example 8, except that the PPS resin composition used was (B-3).

[Reference Example 11] (A-4) Crushed molded product

Crushed molded product (A-4) was obtained in the same manner as in Reference Example 8, except that the PPS resin composition used was (B-4).

[Examples 1 to 3, Comparative Example 1, Reference Examples 4 to 7]

Raw materials were dry blended in the proportions shown in Table 1. Then, the resulting resin composition was injection molded under the conditions described in (3) to obtain an ISO (1A) dumbbell specimen. The glass fiber length (glass fiber length of molded product) and mechanical properties of the resulting ISO (1A) dumbbell specimen were measured.

[Table 1]

| Composition | | | Reference Example 4 | Example 1 | Reference Example 5 | Example 2 | Reference Example 6 | Example 3 | Reference Example 7 | Comparative Example 1 |
|---|---|---|---|---|---|---|---|---|---|---|
| Crushed molded product (A) | | Type | | A-1 | | A-2 | | A-3 | | A-4 |
| | | wt% | | 50 | | 50 | | 50 | | 50 |
| PPS resin composition (B) | | Type | B-1 | B-1 | B-2 | B-2 | B-3 | B-3 | B-4 | B-4 |
| | | wt% | 100 | 50 | 100 | 50 | 100 | 50 | 100 | 50 |
| Properties of PPS resin in PPS resin composition (B) | Weight average molecular weight | - | 40000 | 40000 | 40000 | 40000 | 40000 | 40000 | 75000 | 75000 |
| | Carboxyl group content | μmol/g | 40 | 40 | 40 | 40 | 0 | 0 | 30 | 30 |
| Properties of glass fiber-reinforced recycled PPS resin composition (molded product) | Weight average fiber length (Lw) | μm | 248 | 238 | 220 | 210 | 213 | 175 | 194 | 141 |
| | Number average fiber length (Ln) | μm | 209 | 205 | 190 | 180 | 170 | 135 | 158 | 108 |
| | Lw/Ln | - | 1.19 | 1.16 | 1.16 | 1.17 | 1.25 | 1.30 | 1.23 | 1.31 |
| | Tensile strength | MPa | 200 | 195 | 152 | 148 | 184 | 170 | 175 | 154 |
| | Flexural strength | MPa | 298 | 292 | 234 | 228 | 293 | 278 | 260 | 233 |
| | Notched Charpy Impact Strength | $kJ/m^2$ | 9.9 | 9.4 | 11.0 | 10.3 | 9.5 | 8.5 | 8.0 | 6.1 |

A comparison of the Examples and Comparative Examples shown in Table 1 above reveals the following. In Example 1, deterioration in mechanical properties based on the virgin material of Reference Example 4 was suppressed. On the other hand, the mechanical properties of Comparative Example 1 are deteriorated based on those of the virgin material of Reference Example 7, indicating that a resin composition using the PPS resin having a particular Mw is effective. In addition, deterioration of the mechanical properties of Example 3 based on those of the virgin material of Reference Example 6 is not suppressed compared to those of Example 1, indicating that a resin composition using the PPS resin having a particular carboxyl group content is effective.

[Reference Example 12] (A-5) Crushed molded product after having been used

Regarding automotive metallic insert parts having a resin part composed of the PPS resin composition (B-1), the automotive metallic insert parts recovered after having been used in the market was crushed and the resin part was removed therefrom, then coarsely crushed with a crushing machine so that the major axis dimension was 100 mm or less, and crushed with a crushing machine without washing so that the major axis dimension was 10 mm or less to obtain a crushed molded product (A-5).

[Reference Example 13] (A-6) Crushed molded product after having been used

The crushed molded product (A-6) was obtained in the same manner as in Reference Example 12, except that the resin part was coarsely crushed with a crushing machine so that the major axis dimension was 100 mm or less, the resulting crushed article was washed with warm water at 50°C in a mesh drum type washing apparatus, drained by air blowing, then further crushed with a crushing machine so that the major axis dimension is 10 mm or less.

[Reference Example 14] (A-7) Crushed molded product after having been used

The crushed molded product (A-7) was obtained in the same manner as in Reference Example 12, except that the resin part was coarsely crushed with a crushing machine so that the major axis dimension was 100 mm or less, washed with NMP at 100°C, subsequently with warm water at 50°C in a mesh drum type washing apparatus, drained by air blowing, then crushed with a crushing machine so that the major axis dimension was 10 mm or less.

[Examples 4 to 6]

Raw materials were dry blended in the proportions shown in Table 2, then the resin composition was injection molded, and the glass fiber length (glass fiber length of molded product), mechanical properties and odor level of the resulting ISO (1A) dumbbell specimen were measured and evaluated.

[Table 2]

| Composition | | Reference Example 4 | Example 1 | Example 4 | Example 5 | Example 6 |
|---|---|---|---|---|---|---|
| Crushed molded product (A) | Type | | A-1 | A-5 | A-6 | A-7 |
| | wt% | | 50 | 50 | 50 | 50 |
| PPS resin composition (B) | Type | B-1 | B-1 | B-1 | B-1 | B-1 |
| | wt% | 100 | 50 | 50 | 50 | 50 |

(continued)

| Composition | | | Reference Example 4 | Example 1 | Example 4 | Example 5 | Example 6 |
|---|---|---|---|---|---|---|---|
| Properties of glass fiber-reinforced recycled PPS resin composition (molded product) | Weight average fiber length (Lw) | μm | 248 | 238 | 235 | 235 | 235 |
| | Number average fiber length (Ln) | μm | 209 | 205 | 200 | 200 | 200 |
| | Lw/Ln | - | 1.19 | 1.16 | 1.18 | 1.18 | 1.18 |
| | Tensile strength | % | 200 | 195 | 185 | 190 | 194 |
| | Flexural strength | MPa | 298 | 292 | 280 | 288 | 292 |
| | Notched Charpy Impact Strength | $kJ/m^2$ | 9.9 | 9.4 | 9.2 | 9.2 | 9.2 |
| Odor level | | | - | - | 3.0 | 1.4 | 1.0 |

Examples shown in Table 2 above reveals the following.

In Example 4, mechanical properties were deteriorated and odor was generated compared to the virgin material of Reference Example 4, which means that it is difficult to recycle after having been used in the market. In contrast, in Examples 5 and 6, deterioration in mechanical properties and odor were improved, indicating that washing the crushed molded product with a solvent was effective.

[Reference Example 15] (A'-1) Crushed molded product pellet

The crushed molded product (A-1) obtained in Reference Example 8 was melt-kneaded using a TEX30α twin screw extruder (L/D = 45, 3 kneading parts) manufactured by The Japan Steel Works Ltd. equipped with a vacuum vent at a cylinder temperature of 300°C and a screw rotation speed of 200 rpm to obtain the crushed molded product pellets (A'-1).

[Reference Example 16] (C-1) Glass Long Fiber Reinforced PPS Resin Composite (impregnation method)

The PPS resin (b-1) was melt-kneaded at 320°C in a single screw extruder to a molten state, and fed into an impregnation tank attached to a tip of the extruder. Further, the glass fiber bundle (c-2) was continuously taken up, and allowed to pass through the impregnation tank to obtain an impregnated strand in which a certain amount of the PPS resin was impregnated per unit length of the glass fiber bundle. The impregnated strand was cooled in a water-cooled bath, and cut into 5-mm length pieces to obtain the Glass Long Fiber Reinforced PPS Resin Composite (C-1). The blending amounts were adjusted so that the glass fiber was 40 wt% and the PPS resin was 60 wt%.

[Reference Example 17] (C-2) Glass Long Fiber Reinforced PPS Resin Composite (coating method)

The PPS resin (b-1) and an epoxy group-containing organosilane compound (e-1) were melt-kneaded using a TEX30α twin screw extruder (LID = 45, 3 kneading parts) manufactured by The Japan Steel Works Ltd. equipped with a vacuum vent at a cylinder temperature of 300°C and a screw rotation speed of 200 rpm to obtain the PPS resin composition pellets. Next, the resulting pellets were melt-kneaded at 300°C in a single screw extruder to a molten state, extruded into a crosshead die attached to the tip of the extruder, and at the same time continuous glass fiber bundle (c-2) was continuously fed into the crosshead die, to obtain a strand in which a glass fiber bundle is coated with a certain amount of the PPS resin composition per unit length of the glass fiber bundle in the manner of electric wire coating method. The coated strand was

cooled in a water-cooled bath, and cut into 5-mm length pieces to obtain the Glass Long Fiber Reinforced PPS Resin Composite (C-2) of a core sheath structure. Regarding the blending amount, the blending amount of the PPS resin composition and the thickness of the coating layer were adjusted so that the glass fiber was 40 wt%, the PPS resin was 60 wt%, and the organosilane compound was 0.2 parts by weight with respect to the total of the glass fiber and the PPS resin being 100 parts by weight.

[Reference Example 18] (C-3) Glass Long Fiber Reinforced PPS Resin Composite (coating method)

Pellets of the Glass Long Fiber Reinforced PPS Resin Composite (C-3) of a core sheath structure were obtained in the same manner as in Reference Example 17, except that the PPS resin used was (b-2).

[Reference Example 19] (C-4) Glass Long Fiber Reinforced PPS Resin Composite (coating method)

Pellets of the Glass Long Fiber Reinforced PPS Resin Composite (C-4) of a core sheath structure were obtained in the same manner as in Reference Example 17, except that the organosilane compound was not blended.

[Examples 7 to 11]

Raw materials were dry blended in the proportions shown in Table 3, and then the resulting resin composition was injection molded under the conditions described in (3) to obtain an ISO (1A) dumbbell specimen. The dispersibility test, the density measurement, the glass fiber length (glass fiber length of molded product) and mechanical properties measurements were performed on the resulting ISO (1A) dumbbell specimen.

[Table 3]

| Composition | | | Reference Example 4 | Example 7 | Example 8 | Example 9 | Example 10 | Example 11 |
|---|---|---|---|---|---|---|---|---|
| Pellets of Crushed molded product (A') | | Type | | A'-1 | A'-1 | A'-1 | A'-1 | A'-1 |
| | | wt% | | 50 | 50 | 50 | 50 | 50 |
| PPS resin composition (B) | | Type | B-1 | B-1 | B-1 | B-1 | B-1 | B-1 |
| | | wt% | 100 | 50 | 40 | 40 | 40 | 40 |
| Glass Long Fiber Reinforced PPS Resin Composite (C) | | Type | | | C-1 | C-2 | C-3 | C-4 |
| | | wt% | | | 10 | 10 | 10 | 10 |
| Properties of PPS resin in PPS resin composition (C) | Weight average molecular weight | - | | | 40000 | 40000 | 40000 | 40000 |
| | Carboxyl group content | μmol/g | | | 40 | 40 | 0 | 40 |
| Properties of glass fiber-reinforced recycled PPS resin composition (molded product) | Dispersibility test | - | best | best | best | best | good | good |
| | Density | g/cm$^3$ | 1.67 | 1.67 | 1.67 | 1.67 | 1.67 | 1.67 |
| | Weight average fiber length (Lw) | μm | 248 | 195 | 340 | 330 | 350 | 320 |
| | Number average fiber length (Ln) | μm | 209 | 165 | 248 | 245 | 255 | 240 |
| | Lw/Ln | | 1.19 | 1.18 | 1.37 | 1.35 | 1.37 | 1.33 |
| | Tensile strength | % | 200 | 175 | 205 | 203 | 190 | 192 |

(continued)

| Composition | | | Reference Example 4 | Example 7 | Example 8 | Example 9 | Example 10 | Example 11 |
|---|---|---|---|---|---|---|---|---|
| | Flexural strength | MPa | 298 | 270 | 300 | 300 | 290 | 290 |
| | Notched Charpy Impact Strength | $kJ/m^2$ | 9.9 | 8.2 | 12.0 | 11.8 | 12.2 | 11.5 |

Compared to Example 7, in Examples 8 to 11, the average fiber length of the glass fibers increased while maintaining the same density, and the physical properties of the glass fiber-reinforced recycled PPS resin composition were improved. Thus, the addition of Glass Long Fiber Reinforced PPS Resin Composite was shown to be effective. On the other hand, in Examples 10 to 11, slightly poor dispersion of glass fibers was occasionally observed in the molded products compared to Examples 8 to 9. It is shown that the Glass Long Fiber Reinforced PPS Resin Composite obtained by the coating method has improved glass fiber dispersibility by using a carboxyl group-containing PPS resin and an organosilane compound concurrently.

[Reference Example 20] (A'-2) Crushed molded product pellet

The crushed molded product (A'-2) was obtained in the same manner as in Reference Example 15, except that the crushed molded product used was (A-2).

[Reference Example 21] (C'-5) Glass Long Fiber Reinforced PPS Resin Composite (impregnation method)

93 wt% of the PPS resin (b-1), 3.5 wt% of the epoxy group-containing olefin copolymer (d-1), 3.5 wt% of the unmodified olefin copolymer (d-2), and 0.43 parts by weight of an epoxy group-containing organosilane compound (e-1), with a total of the PPS resin (b-1), the epoxy group-containing olefin copolymer (d-1), and the unmodified olefin copolymer (d-2) being 100 parts by weight, were melt-kneaded using a TEX30$\alpha$ twin screw extruder (L/D = 45, 3 kneading parts) manufactured by The Japan Steel Works Ltd. equipped with a vacuum vent at a cylinder temperature of 300°C and a screw rotation speed of 200 rpm to obtain the PPS resin composition pellets. Then, the resulting pellets were melt-kneaded at 320°C in a single screw extruder to a molten state, and fed into an impregnation tank attached to a tip of the extruder. Further, an impregnated strand containing 30 wt% of the glass fiber bundle, in which a certain amount of the PPS resin was impregnated per unit length of the glass fiber bundle was attempted to obtain by continuously taking up the glass fiber bundle (c-2), allowing it to pass in the impregnation tank, cooling and cutting into 5-mm length pieces. However, it was impossible to impregnate the glass fiber bundle with the PPS resin composition.

[Reference Example 22] (C-5) Glass Long Fiber Reinforced PPS Resin Composite (impregnation method)

Pellets of the Glass Long Fiber Reinforced PPS Resin Composite (C-5) was obtained in the same manner as in Reference Example 21, except that the temperature at which the PPS resin composition was melt-kneaded in a single screw extruder was set to 360°C. The composition of (c-5) was 65 wt% of the PPS resin (b-1), 30 wt% of the glass fiber bundle (c-2), 2.5 wt% of an epoxy group-containing olefin copolymer (d-1), 2.5 wt% of an unmodified olefin copolymer (d-2), and 0.3 parts by weight of an epoxy group-containing organosilane compound (e-1), with a total of the PPS resin (b-1), the glass fiber bundle (c-2), the epoxy group-containing olefin copolymer (d-1), and the unmodified olefin copolymer (d-2) being 100 parts by weight, which was the same as that of (B-2) polyphenylene sulfide resin composition (virgin material) obtained in Reference Example 5.

[Reference Example 23] (C-6) Glass Long Fiber Reinforced PPS Resin Composite (coating method)

93 wt% of the PPS resin (b-1), 3.5 wt% of the epoxy group-containing olefin copolymer (d-1), 3.5 wt% of the unmodified olefin copolymer (d-2), and 0.43 parts by weight of an epoxy group-containing organosilane compound (e-1), with a total of the PPS resin (b-1), the epoxy group-containing olefin copolymer (d-1), and the unmodified olefin copolymer (d-2) being 100 parts by weight, were melt-kneaded using a TEX30$\alpha$ twin screw extruder (L/D = 45, 3 kneading parts) manufactured by The Japan Steel Works Ltd. equipped with a vacuum vent at a cylinder temperature of 300°C and a screw rotation speed of 200 rpm to obtain the PPS resin composition pellets. Next, the resulting pellets were melt-kneaded at 300°C in a single screw extruder to a molten state, extruded into a crosshead die attached to the tip of the extruder, and at

the same time continuous glass fiber bundle was continuously fed into the crosshead die, and a certain amount of the PPS resin composition per unit length of the glass fiber bundle is coated on the periphery of the glass fiber bundle in the manner of electric wire coating method, and the coated strand containing 30 wt% of the glass fiber bundle was cooled in a water-cooled bath and cut into 5-mm length pieces to obtain the pellets of the Glass Long Fiber Reinforced PPS Resin Composite (C-6) having a core sheath structure. The composition of (c-6) was 65 wt% of the PPS resin (b-1), 30 wt% of the glass fiber bundle (c-2), 2.5 wt% of an epoxy group-containing olefin copolymer (d-1), 2.5 wt% of an unmodified olefin copolymer (d-2), and 0.3 parts by weight of an epoxy group-containing organosilane compound (e-1), with a total of the PPS resin (b-1), the glass fiber bundle (c-2), the epoxy group-containing olefin copolymer (d-1), and the unmodified olefin copolymer (d-2) being 100 parts by weight, which was the same as that of (B-2) polyphenylene sulfide resin composition (virgin material) obtained in Reference Example 5.

[Reference Example 24] (C-7) Glass Long Fiber Reinforced PPS Resin Composite (coating method)

Pellets of the Glass Long Fiber Reinforced PPS Resin Composite (C-7) were obtained in the same manner as in Reference Example 23, except that the organosilane compound used was (e-2).

[Reference Example 25] (C-8) Glass Long Fiber Reinforced PPS Resin Composite (coating method)

Pellets of the Glass Long Fiber Reinforced PPS Resin Composite (C-8) were obtained in the same manner as in Reference Example 23, except that the organosilane compound used was (e-3).

[Reference Example 26] (C-9) Glass Long Fiber Reinforced PPS Resin Composite (coating method)

Pellets of the Glass Long Fiber Reinforced PPS Resin Composite (C-9) were obtained in the same manner as in Reference Example 23, except that the organosilane compound was not blended.

[Examples 12 to 20]

Raw materials were dry blended in the proportions shown in Table 4, and then the resulting resin composition was injection molded under the conditions described in (3) to obtain an ISO (1A) dumbbell specimen. The dispersibility test, the density measurement, the phase-separated structure observation, the glass fiber length (glass fiber length of molded product) and mechanical properties measurements were performed on the resulting ISO (1A) dumbbell specimen.

[Table 4]

| Composition | | | Reference Example 5 | Example 12 | Example 13 | Example 14 | Example 15 | Example 16 | Example 17 | Example 18 | Example 19 | Example 20 |
|---|---|---|---|---|---|---|---|---|---|---|---|---|
| Pellets of Crushed molded product (A') | | Type | | A'-2 | A'-2 | A'-2 | A'-2 | A'-2 | A'-2 | A'-2 | A'-2 | A'-2 |
| | | wt% | | 50 | 50 | 50 | 50 | 50 | 50 | 25 | 50 | 75 |
| PPS resin composition (B) | | Type | B-2 | B-2 | B-2 | B-2 | B-2 | B-2 | B-2 | | | |
| | | wt% | 100 | 50 | 40 | 40 | 40 | 40 | 40 | | | |
| Glass Long Fiber Reinforced PPS Resin Composite (C) | | Type | | | C-5 | C-6 | C-7 | C-8 | C-9 | C-6 | C-6 | C-6 |
| | | wt% | | | 10 | 10 | 10 | 10 | 10 | 75 | 50 | 25 |
| Properties of glass fiber-reinforced recycled PPS resin composition (molded product) | Dispersibility test | - | best | best | best | best | best | best | good | best | best | best |
| | Density | g/cm$^3$ | 1.52 | 1.52 | 1.52 | 1.52 | 1.52 | 1.52 | 1.52 | 1.52 | 1.52 | 1.52 |
| | Injection pressure (fluidity index) | MPa | 50 | 45 | 55 | 53 | 50 | 51 | 48 | 67 | 62 | 48 |
| | Number average dispersion diameter of olefin | nm | 300 | 400 | 1500 | 400 | 300 | 350 | 700 | 400 | 400 | 400 |
| | copolym | | | | | | | | | | | |
| | Weight average fiber length (Lw) | μm | 220 | 190 | 320 | 290 | 310 | 300 | 320 | 582 | 451 | 348 |
| | Number average fiber length (Ln) | μm | 190 | 150 | 240 | 220 | 235 | 225 | 240 | 252 | 219 | 214 |
| | Lw/Ln | | 1.16 | 1.27 | 1.33 | 1.32 | 1.32 | 1.33 | 1.33 | 2.31 | 2.06 | 1.63 |
| | Tensile strength | % | 152 | 134 | 137 | 148 | 152 | 150 | 140 | 157 | 153 | 149 |

(continued)

| Composition | | | Reference Example 5 | Example 12 | Example 13 | Example 14 | Example 15 | Example 16 | Example 17 | Example 18 | Example 19 | Example 20 |
|---|---|---|---|---|---|---|---|---|---|---|---|---|
| | Flexural strength | MPa | 234 | 212 | 220 | 229 | 235 | 230 | 220 | 240 | 232 | 228 |
| | Notched Charpy Impact Strength | $kJ/m^2$ | 11.0 | 9.0 | 11.0 | 11.3 | 11.5 | 11.5 | 11.7 | 14.0 | 12.8 | 12.0 |

Examples shown in Table 4 above reveals the following.

Compared to Example 12, in Examples 13 to 17, the average fiber length of the glass fibers increased while maintaining the same density, and the physical properties of the glass fiber-reinforced recycled PPS resin composition were improved. Thus, the addition of Glass Long Fiber Reinforced PPS Resin Composite was shown to be effective. On the other hand, in Example 13, the number average dispersion diameter of the olefin copolymer was large, and a decrease in physical properties were observed. It can be seen that the glass fiber bundle was forced to be impregnated with the high viscosity PPS resin composition at high temperatures, resulting in gelation of the olefin copolymer. On the other hand, in Example 17, slightly poor dispersion of glass fibers was occasionally observed in the molded products compared to Examples 14 to 16. It is shown that the Glass Long Fiber Reinforced PPS Resin Composite obtained by the coating method has improved glass fiber dispersibility by adding an organosilane compound.

Furthermore, Examples 18 to 20 shows that as the blending amount of the Glass Long Fiber Reinforced PPS Resin Composite (C) increases, Lw/Ln and mechanical properties increase.

[Reference Example 27] (B-5) Polyphenylene sulfide resin composition (virgin material)

PPS resin composition (B-5) was obtained in the same manner as in Reference Example 4, except that 45 wt% of the PPS resin (b-1), 30 wt% of the glass fiber (c-1), 2.5 wt% of an epoxy group-containing olefin copolymer (d-1), 2.5 wt% of an unmodified olefin copolymer (d-2), 20 wt% of calcium carbonate (KSS-1000, manufactured by CALFINE Co., Ltd.), and 0.3 parts by weight of an epoxy group-containing organosilane compound (e-1), with a total of the PPS resin (b-1), the glass fiber (c-1), the epoxy group-containing olefin copolymer (d-1), the unmodified olefin copolymer (d-2), and calcium carbonate being 100 parts by weight, were mixed.

[Reference Example 28] (A-8) Crushed molded product and (A'-8) crushed molded product pellet

The crushed molded product (A-8) was obtained in the same manner as in Reference Example 8, except that the PPS resin composition used was (B-5). Then, the crushed molded product pellet(A'-8) was obtained using the resulting crushed molded product (A-8) in the same manner as in Reference Example 15.

[Reference Example 29] (C-10) Glass Long Fiber Reinforced PPS Resin Composite (coating method)

65 wt% of the PPS resin (b-1), 3.5 wt% of the epoxy group-containing olefin copolymer (d-1), 3.5 wt% of the unmodified olefin copolymer (d-2), 28 wt% of calcium carbonate(KSS-1000, manufactured by CALFINE Co., Ltd.), and 0.43 parts by weight of an epoxy group-containing organosilane compound (e-1), with a total of the PPS resin (b-1), the epoxy group-containing olefin copolymer (d-1), the unmodified olefin copolymer (d-2), and calcium carbonate being 100 parts by weight, were melt-kneaded using a TEX30$\alpha$ twin screw extruder (L/D = 45, 3 kneading parts) manufactured by The Japan Steel Works Ltd. equipped with a vacuum vent at a cylinder temperature of 300°C and a screw rotation speed of 200 rpm to obtain the PPS resin composition pellets. Next, pellets of the Glass Long Fiber Reinforced PPS Resin Composite (C-10) of a core sheath structure were obtained in the same manner as in Reference Example 23, except that the resulting resin was used. The composition of (C-10) was 45 wt% of the PPS resin (b-1), 30 wt% of the glass fiber bundle (c-2), 2.5 wt% of the epoxy group-containing olefin copolymer (d-1), 2.5 wt% of the unmodified olefin copolymer (d-2), 20 wt% of calcium carbonate, and 0.3 parts by weight of an epoxy group-containing organosilane compound (e-1), with a total of the PPS resin (b-1), the glass fiber bundle (c-2), the epoxy group-containing olefin copolymer (d-1), and the unmodified olefin copolymer (d-2) being 100 parts by weight, which was similar to that of a polyphenylene sulfide resin composition (B-5) (virgin material) obtained in Reference Example 27.

[Examples 21 to 22, Reference Example 27]

Raw materials were dry blended in the proportions shown in Table 5, and then the resulting resin composition was injection molded under the conditions described in (3) to obtain an ISO (1A) dumbbell specimen. The dispersibility test, the density measurement, the phase-separated structure observation, the glass fiber length (glass fiber length of molded product) and mechanical properties measurements were performed on the resulting ISO (1A) dumbbell specimen.

[Table 5]

| Composition | | Reference Example 27 | Example 21 | Example 22 |
|---|---|---|---|---|
| Pellets of Crushed molded product (A') | Type | | A'-8 | A'-8 |
| | wt% | | 50 | 50 |

(continued)

| Composition | | | Reference Example 27 | Example 21 | Example 22 |
|---|---|---|---|---|---|
| PPS resin composition (B) | | Type | B-5 | B-5 | |
| | | wt% | 100 | 50 | |
| Glass Long Fiber Reinforced PPS Resin Composite (C) | | Type | | | C-10 |
| | | wt% | | | 50 |
| Properties of glass fiber-reinforced recycled PPS resin composition (molded product) | Dispersibility test | - | best | best | best |
| | Density | $g/cm^3$ | 1.65 | 1.65 | 1.65 |
| | Injection pressure (fluidity index) | MPa | 44 | 38 | 55 |
| | Number average dispersion diameter of olefin copolymer | nm | 300 | 400 | 400 |
| | Weight average fiber length (Lw) | μm | 295 | 220 | 480 |
| | Number average fiber length (Ln) | μm | 250 | 190 | 230 |
| | Lw/Ln | | 1.18 | 1.16 | 2.09 |
| | Tensile strength | % | 160 | 145 | 162 |
| | Flexural strength | MPa | 235 | 220 | 237 |
| | Notched Charpy Impact Strength | $kJ/m^2$ | 9.0 | 7.5 | 11.0 |

The results of Examples 21-22 also showed recovery of mechanical properties for resin compositions containing non-fibrous fillers.

[Reference Example 30] (A-9) Crushed molded product after having been used with unknown compositional ratio

The PPS resin composition of unknown composition ratio, which was printed as PPS-GF printed on the molded product, was crushed and removed from the automotive metallic insert parts recovered after having been used in the market, then coarsely crushed with a crushing machine so that the major axis dimension was 100 mm or less, and the crushed article was washed with warm water at 50°C in a mesh drum type washing apparatus, drained by air blowing, then further crushed with a crushing machine so that the major axis dimension was 10 mm or less to obtain the crushed molded product (A-9). For A-9, ash content was 38 wt%, and density was 1.62 $g/cm^3$.

[Examples 23 to 24, Reference Example 30]

The PPS resin composition (B-1) (density 1.67$g/cm^3$: density difference from A-9 is - 3.0%; ash content 40%: ash content difference from A-9 is - 6.3%) obtained in Reference Example 4, the Glass Long Fiber Reinforced PPS Resin Composite (C-2) (density 1.67$g/cm^3$: density difference from A-9 is - 3.0%, ash content: 40%, ash content difference from A-9 is - 6.3%) obtained in Reference Example 17, and the crushed molded product (A-9) were dry blended in the proportions shown in Table 6, and then the resulting resin composition was injection molded under the conditions described in (3) above to obtain an ISO (1A) dumbbell specimen. The density, the glass fiber length (glass fiber length of molded product) and mechanical properties of the resulting ISO (1A) dumbbell specimen were measured.

[Table 6]

| Composition | | Reference Example 30 | Example 23 | Example 24 |
|---|---|---|---|---|
| Crushed molded product (A) | Type | A-9 | A-9 | A-9 |
| | wt% | 100 | 50 | 75 |

(continued)

| Composition | | | Reference Example 30 | Example 23 | Example 24 |
|---|---|---|---|---|---|
| PPS resin composition (B) | | Type | | B-1 | |
| | | wt% | | 50 | |
| Glass Long Fiber Reinforced PPS Resin Composite (C) | | Type | | | C-2 |
| | | wt% | | | 25 |
| Properties of glass fiber-reinforced recycled PPS resin composition (molded product) | Density | g/cm$^3$ | 1.62 | 1.65 | 1.63 |
| | Weight average fiber length (Lw) | μm | 210 | 195 | 348 |
| | Number average fiber length (Ln) | μm | 180 | 165 | 214 |
| | Lw/Ln | | 1.17 | 1.18 | 1.63 |
| | Tensile strength | % | 180 | 187 | 195 |
| | Flexural strength | MPa | 278 | 285 | 290 |
| | Notched Charpy Impact Strength | kJ/m$^2$ | 8.0 | 8.7 | 11.5 |

The results of Examples 23 to 24 show that even when the crushed molded product after use whose compositional ratio is unknown is used, the average fiber length of the glass fiber is increased and mechanical properties of the glass fiber-reinforced recycled PPS resin composition are improved. The resulting glass fiber-reinforced recycled PPS resin composition has a density equivalent to that of the crushed molded product, which means that it can be applied to closed-loop recycling.

## Claims

**1.** A method of producing a glass fiber-reinforced recycled PPS resin composition, comprising:

crushing a molded product containing a polyphenylene sulfide (hereinafter also referred to as "PPS") resin and glass fibers to obtain a crushed molded product (A), and
mixing the crushed molded product (A) and a PPS resin composition (B) (hereinafter also referred to as "PPS resin composition (B)") containing 40 to 90 wt% of the PPS resin having a weight average molecular weight (hereinafter also referred to as "Mw") of 20,000 to 60,000 wherein the Mw is measured as defined in the description and 10 to 60 wt% of glass fibers.

**2.** The method of producing a glass fiber-reinforced recycled PPS resin composition according to claim 1, wherein the PPS resin composition (B) comprising a PPS resin containing 20 to 400 μmol/g of carboxyl groups, wherein the amount of carboxyl groups is measured as defined in the description.

**3.** The method of producing a glass fiber-reinforced recycled PPS resin composition according to claim 1 or 2, wherein the crushed molded product (A) comprises 40 to 90 wt% of the PPS resin having Mw of 20,000 to 60,000 and 10 to 60 wt% of the glass fibers.

**4.** The method of producing a glass fiber-reinforced recycled PPS resin composition according to any one of claims 1 to 3, wherein the crushed molded product (A) comprises 1 to 20 wt% of an olefin copolymer, and the PPS resin composition (B) comprises 1 to 20 wt% of the olefin copolymer.

**5.** The method of producing a glass fiber-reinforced recycled PPS resin composition according to any one of claims 1 to 4, wherein the crushed molded product (A) is a crushed molded product pellet obtained by crushing the molded product, followed by melt-kneading with an extruder.

**6.** The method of producing a glass fiber-reinforced recycled PPS resin composition according to any one of claims 1 to 5, wherein the crushed molded product (A) is obtained by crushing a molded product recovered after having been used as a product.

7. The method of producing a glass fiber-reinforced recycled PPS resin composition according to any one of claims 1 to 6, wherein the molded product recovered after having been used as a product is washed with a solvent, and then crushed to obtain the crushed molded product (A).

8. The method of producing a glass fiber-reinforced recycled PPS resin composition according to any one of claims 1 to 7, wherein a Glass Long Fiber Reinforced PPS Resin Composite (hereinafter also referred to as "Glass Long Fiber Reinforced PPS Resin Composite (C) ") is used for a part or all of the PPS resin composition (B), the Glass Long Fiber Reinforced PPS Resin Composite containing 10 to 80 wt% of glass fiber bundles aligned in the length direction of the pellets of the PPS resin (C), and the pellets has a length of 3.0 to 50 mm,, optionally, wherein the Glass Long Fiber Reinforced PPS Resin Composite (C) contains 40 to 90 wt% of the PPS resin having Mw of 20,000 to 60,000, and 10 to 60 wt% of the glass fiber bundles.

9. The method of producing a glass fiber-reinforced recycled PPS resin composition according to claim 8, wherein the Glass Long Fiber Reinforced PPS Resin Composite (C) comprises 1 to 20 wt% of the olefin copolymer, optionally, wherein, in the phase-separated structure of the Glass Long Fiber Reinforced PPS Resin Composite (C), the PPS resin forms a continuous phase, and the olefin copolymer forms a dispersed phase in which it is dispersed with a number average dispersion diameter of 500 nm or less, wherein the number average dispersion diameter is measured as defined in the description.

10. The method of producing a glass fiber-reinforced recycled PPS resin composition according to any one of claims 8 to 9, wherein the crushed molded product (A), the PPS resin composition (B), and the Glass Long Fiber Reinforced PPS Resin Composite (C) have substantially the same composition.

11. The method of producing a glass fiber-reinforced recycled PPS resin composition according to any one of claims 8 to 10, wherein the Glass Long Fiber Reinforced PPS Resin Composite (C) has a core sheath structure in which the PPS resin composition is arranged so as to cover the periphery of the glass fiber bundle.

12. The method of producing a glass fiber-reinforced recycled PPS resin composition according to any one of claims 8 to 11, wherein the Glass Long Fiber Reinforced PPS Resin Composite (C) comprises 0.01 to 5 wt% of an organosilane compound having at least one functional group selected from an epoxy group, an amino group, and an isocyanate group.

13. A molded product obtained by molding a glass fiber-reinforced recycled PPS resin composition containing 40 to 90 wt% of a PPS resin having Mw of 20,000 to 60,000 wherein the Mw is measured as defined in the description and 10 to 60 wt% of glass fibers,
wherein a ratio (Lw/Ln) between a weight average fiber length (Lw) and a number average fiber length (Ln) of the glass fiber of the molded product is 1.3 or more and 4.0 or less, wherein the Ln and Lw are measured as defined in the description

14. The molded product according to claim 13, wherein the glass fiber-reinforced recycled PPS resin composition comprises 1 to 20 wt% of the olefin copolymer.

15. The molded product according to claim 14, wherein the PPS resin forms a continuous phase, and the olefin copolymer forms a dispersed phase in which it is dispersed with a number average dispersion diameter of 500 nm or less, wherein the number average dispersion diameter is measured as defined in the description.

## Patentansprüche

1. Verfahren zur Herstellung einer Glasfaser-verstärkten recycelten PPS-Harzzusammensetzung, das Folgendes umfasst:

   das Zerkleinern eines Formprodukts, das ein Polyphenylensulfid- (hierin nachfolgend als "PPS-" bezeichnet) Harz und Glasfasern enthält, um ein zerkleinertes Formprodukt (A) zu erhalten, und
   das Vermischen des zerkleinerten Formprodukts (A) und einer PPS-Harzzusammensetzung (B) (hierin nachfolgend auch als "PPS-Harzzusammensetzung (B)" bezeichnet), die 40 bis 90 Gew.-% des PPS-Harzes, das ein gewichtsmittleres Molekulargewicht (hierin nachfolgend auch als "Mw" bezeichnet) von 20.000 bis 60.000 aufweist, wobei das Mw wie in der Beschreibung definiert gemessen wird, und 10 bis 60 Gew.-% Glasfasern

enthält.

2. Verfahren zur Herstellung einer Glasfaser-verstärkten recycelten PPS-Harzzusammensetzung nach Anspruch 1, wobei die PPS-Harzzusammensetzung (B) ein PPS-Harz umfasst, das 20 bis 400 μmol/g Carboxylgruppen enthält, wobei die Menge der Carboxylgruppen wie in der Beschreibung definiert gemessen wird.

3. Verfahren zur Herstellung einer Glasfaser-verstärkten recycelten PPS-Harzzusammensetzung nach Anspruch 1 oder 2, wobei das zerkleinerte Formprodukt (A) 40 bis 90 Gew.-% des PPS-Harzes, das ein Mw von 20.000 bis 60.000 aufweist, und 10 bis 60 Gew.-% der Glasfasern umfasst.

4. Verfahren zur Herstellung einer Glasfaser-verstärkten recycelten PPS-Harzzusammensetzung nach einem der Ansprüche 1 bis 3, wobei das zerkleinerte Formprodukt (A) 1 bis 20 Gew.-% eines Olefin-Copolymers umfasst und die PPS-Harzzusammensetzung (B) 1 bis 20 Gew.-% des Olefin-Copolymers umfasst.

5. Verfahren zur Herstellung einer Glasfaser-verstärkten recycelten PPS-Harzzusammensetzung nach einem der Ansprüche 1 bis 4, wobei das zerkleinerte Formprodukt (A) ein Pellet eines zerkleinerten Formprodukts ist, das durch Zerkleinern des Formprodukts, gefolgt von Schmelzkneten mit einem Extruder erhalten wird.

6. Verfahren zur Herstellung einer Glasfaser-verstärkten recycelten PPS-Harzzusammensetzung nach einem der Ansprüche 1 bis 5, wobei das zerkleinerte Formprodukt (A) durch Zerkleinern eines Formprodukts erhalten wird, das gewonnen wurde, nachdem es als Produkt verwendet worden war.

7. Verfahren zur Herstellung einer Glasfaser-verstärkten recycelten PPS-Harzzusammensetzung nach einem der Ansprüche 1 bis 6, wobei das Formprodukt, das gewonnen wurde, nachdem es als Produkt gewonnen worden war, mit einem Lösungsmittel gewaschen und danach zerkleinert wird, um das zerkleinerte Formprodukt (A) zu erhalten.

8. Verfahren zur Herstellung einer Glasfaser-verstärkten recycelten PPS-Harzzusammensetzung nach einem der Ansprüche 1 bis 7, wobei ein Langglasfaser-verstärkter PPS-Harz-Verbundstoff (hierin nachfolgend auch als "Langglasfaser-verstärkter PPS-Harz-Verbundproduktstoff (C)" bezeichnet) für einen Teil oder die gesamte PPS-Harzzusammensetzung (B) verwendet wird, wobei der Langglasfaser-verstärkte PPS-Harz-Verbundstoff 10 bis 80 Gew.-% Glasfaser-Bündel enthält, die in Längsrichtung der Pellets des PPS-Harzes (C) ausgerichtet sind, und die Pellets eine Länge von 3,0 bis 50 mm aufweisen, wobei der Langglasfaser-verstärkte PPS-Harz-Verbundstoff (C) 40 bis 90 Gew.-% des PPS-Harzes, das ein Mw von 20.000 bis 60.000 aufweist, und 10 bis 60 Gew.-% der Glasfaser-Bündel enthält.

9. Verfahren zur Herstellung einer Glasfaser-verstärkten recycelten PPS-Harzzusammensetzung nach Anspruch 8, wobei der Langglasfaser-verstärkte PPS-Harz-Verbundstoff (C) 1 bis 20 Gew.-% des Olefin-Copolymers enthält, wobei in der phasengetrennten Struktur des Langglasfaser-verstärkten PPS-Harz-Verbundstoffs (C) das PPS-Harz gegebenenfalls eine kontinuierliche Phase bildet, und wobei das Olefin-Copolymer eine dispergierte Phase bildet, in der es mit einem zahlenmittleren Dispersions-Durchmesser von 500 nm oder weniger dispergiert ist, wobei der zahlenmittlere Dispersions-Durchmesser wie in der Beschreibung definiert gemessen wird.

10. Verfahren zur Herstellung einer Glasfaser-verstärkten recycelten PPS-Harzzusammensetzung nach einem der Ansprüche 8 bis 9, wobei das zerkleinerte Formprodukt (A), die PPS-Harzzusammensetzung (B) und der Langglasfaser-verstärkte PPS-Harz-Verbundstoff (C) im Wesentlichen dieselbe Zusammensetzung aufweisen.

11. Verfahren zur Herstellung einer Glasfaser-verstärkten recycelten PPS-Harzzusammensetzung nach einem der Ansprüche 8 bis 10, wobei der Langglasfaser-verstärkte PPS-Harz-Verbundstoff (C) eine Kern-Hüllen-Struktur aufweist, in der die PPS-Harzzusammensetzung so angeordnet ist, dass sie den Umfang des Glasfaser-Bündels bedeckt.

12. Verfahren zur Herstellung einer Glasfaser-verstärkten recycelten PPS-Harzzusammensetzung nach einem der Ansprüche 8 bis 11, wobei der Langglasfaser-verstärkte PPS-Harz-Verbundstoff (C) 0,01 bis 5 Gew.-% einer Organosilanverbindung umfasst, die zumindest eine funktionelle Gruppe aufweist, die aus einer Epoxygruppe, einer Aminogruppe und einer Isocyanatgruppe ausgewählt ist.

13. Formprodukt, das durch Formen einer Glasfaser-verstärkten PPS-Harzzusammensetzung erhältlich ist, die 40 bis 90 Gew.-% eines PPS-Harzes, das ein Mw von 20.000 bis 60.000 aufweist, und 10 bis 60 Gew.-% Glasfasern enthält,

wobei das Verhältnis (Lw/Ln) zwischen der gewichtsmittleren Faserlänge (Lw) und der zahlenmittleren Faserlänge (Ln) der Glasfaser des Formprodukts 1,3 oder mehr und 4,0 oder weniger beträgt, wobei Ln und Lw wie in der Beschreibung definiert gemessen werden.

**14.** Formprodukt nach Anspruch 13, wobei die Glasfaser-verstärkte recycelte PPS-Harzzusammensetzung 1 bis 20 Gew.-% des Olefin-Copolymers umfasst.

**15.** Formprodukt nach Anspruch 14, wobei das PPS-Harz eine kontinuierliche Phase bildet und das Olefin-Copolymer eine dispergierte Phase bildet, in der es mit einem zahlenmittleren Dispersions-Durchmesser von 500 nm oder weniger dispergiert ist, wobei der zahlenmittlere Dispersions-Durchmesser wie in der Beschreibung definiert gemessen wird.

**Revendications**

**1.** Procédé de production d'une composition de résine de PPS recyclée renforcée de fibres de verre, comprenant les étapes consistant à :

broyer un produit moulé contenant une résine de sulfure de polyphénylène (ci-après également appelé « PPS ») et des fibres de verre pour obtenir un produit moulé broyé (A), et

mélanger le produit moulé broyé (A) et une composition de résine de PPS (B) (ci-après également dénommée « composition de résine de PPS (B) ») contenant de 40 à 90 % en poids de la résine de PPS présentant un poids moléculaire moyen en poids (ci-après également dénommé « Mw ») de 20 000 à 60 000, dans lequel le Mw est mesuré comme défini dans la description, et de 10 à 60 % en poids de fibres de verre.

**2.** Procédé de production d'une composition de résine de PPS recyclée renforcée de fibres de verre selon la revendication 1, dans lequel la composition de résine de PPS (B) comprend une résine de PPS contenant de 20 à 400 μmol/g de groupes carboxyle, dans lequel la quantité de groupes carboxyle est mesurée comme défini dans la description.

**3.** Procédé de production d'une composition de résine de PPS recyclée renforcée de fibres de verre selon la revendication 1 ou 2, dans lequel le produit moulé broyé (A) comprend de 40 à 90 % en poids de la résine de PPS présentant un Mw de 20 000 à 60 000, et de 10 à 60 % en poids des fibres de verre.

**4.** Procédé de production d'une composition de résine de PPS recyclée renforcée de fibres de verre selon l'une quelconque des revendications 1 à 3, dans lequel le produit moulé broyé (A) comprend de 1 à 20 % en poids d'un copolymère d'oléfine, et la composition de résine de PPS (B) comprend de 1 à 20 % en poids du copolymère d'oléfine.

**5.** Procédé de production d'une composition de résine de PPS recyclée renforcée de fibres de verre selon l'une quelconque des revendications 1 à 4, dans lequel le produit moulé broyé (A) est une pastille de produit moulé broyé obtenue par broyage du produit moulé, suivi d'un malaxage à l'état fondu à l'aide d'une extrudeuse.

**6.** Procédé de production d'une composition de résine de PPS recyclée renforcée de fibres de verre selon l'une quelconque des revendications 1 à 5, dans lequel le produit moulé broyé (A) est obtenu par broyage d'un produit moulé récupéré après avoir été utilisé en tant que produit.

**7.** Procédé de production d'une composition de résine de PPS recyclée renforcée de fibres de verre selon l'une quelconque des revendications 1 à 6, dans lequel le produit moulé récupéré après avoir été utilisé en tant que produit est lavé avec un solvant, puis broyé pour obtenir le produit moulé broyé (A).

**8.** Procédé de production d'une composition de résine de PPS recyclée renforcée de fibres de verre selon l'une quelconque des revendications 1 à 7, dans lequel un composite de résine de PPS renforcée par de fibres de verre longues (ci-après également appelé « composite de résine PPS renforcée de fibres de verre longues (C) ») est utilisé pour une partie ou la totalité de la composition de résine de PPS (B), le composite de résine de PPS renforcées de fibres de verre longues contenant de 10 à 80 % en poids de faisceaux de fibres de verre alignés dans la direction de la longueur des pastilles de résine de PPS (C), et les pastilles présentant une longueur de 3,0 à 50 mm, facultativement dans lequel le composite de résine de PPS renforcé de fibres de verre longues (C) contient de 40 à 90 % en poids de la résine de PPS présentant un Mw de 20 000 à 60 000, et 10 à 60 % en poids des faisceaux de fibres de verre.

**9.** Procédé de production d'une composition de résine de PPS recyclée renforcée de fibres de verre selon la revendication 8,
dans lequel le composite de résine de PPS renforcée de fibres de verre longues (C) comprend de 1 à 20 % en poids du copolymère d'oléfine, facultativement, dans lequel dans la structure à phases séparées du composite de résine de PPS renforcée de fibres de verre longues (C), la résine de PPS forme une phase continue, et le copolymère d'oléfine forme une phase dispersée dans laquelle il est dispersé avec un diamètre de dispersion moyen en nombre de 500 nm ou moins, dans lequel le diamètre de dispersion moyen en nombre est mesuré comme défini dans la description.

**10.** Procédé de production d'une composition de résine de PPS recyclée renforcée de fibres de verre selon l'une quelconque des revendications 8 à 9, dans lequel le produit moulé broyé (A), la composition de résine de PPS (B) et le composite de résine de PPS renforcée de fibres de verre longues (C) présentent sensiblement la même composition.

**11.** Procédé de production d'une composition de résine de PPS recyclée renforcée de fibres de verre selon l'une quelconque des revendications 8 à 10, dans lequel le composite de résine de PPS renforcée de fibres de verre longues (C) présente une structure de gaine centrale dans laquelle la composition de résine de PPS est agencée de manière à couvrir la périphérie du faisceau de fibres de verre.

**12.** Procédé de production d'une composition de résine de PPS recyclée renforcée de fibres de verre selon l'une quelconque des revendications 8 à 11, dans lequel le composite de résine de PPS renforcée de fibres de verre longues (C) comprend de 0,01 à 5 % en poids d'un composé d'organosilane présentant au moins un groupe fonctionnel choisi parmi un groupe époxy, un groupe amino et un groupe isocyanate.

**13.** Produit moulé obtenu par moulage d'une composition de résine de PPS recyclée renforcée de fibres de verre contenant de 40 à 90 % en poids d'une résine de PPS présentant un Mw de 20 000 à 60 000, dans lequel le Mw est mesuré comme défini dans la description, et de 10 à 60 % en poids de fibres de verre,
dans lequel un rapport (Lw/Ln) entre une longueur de fibre moyenne en poids (Lw) et une longueur de fibre moyenne en nombre (Ln) de la fibre de verre du produit moulé est de 1,3 ou plus et de 4,0 ou moins, dans lequel les Ln et Lw sont mesurées comme défini dans la description.

**14.** Produit moulé selon la revendication 13, dans lequel la composition de résine de PPS recyclée renforcée de fibres de verre comprend de 1 à 20 % en poids du copolymère d'oléfine.

**15.** Produit moulé selon la revendication 14, dans lequel la résine de PPS forme une phase continue, et le copolymère d'oléfine forme une phase dispersée dans laquelle il est dispersé avec un diamètre de dispersion moyen en nombre de 500 nm ou moins, dans lequel le diamètre de dispersion moyen en nombre est mesuré comme défini dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H1077408 A
- JP 2001026719 A
- JP H11166054 A
- JP 2009291986 A